(19) Europäisches Patentamt
European Patent Office
Office européen des brevets

(11) EP 3 546 497 A1

(12) **EUROPEAN PATENT APPLICATION**
published in accordance with Art. 153(4) EPC

(43) Date of publication:
**02.10.2019 Bulletin 2019/40**

(21) Application number: **17874688.9**

(22) Date of filing: **06.11.2017**

(51) Int Cl.:
***C08G 77/42*** *(2006.01)* ***C09D 183/04*** *(2006.01)*
***C08L 83/10*** *(2006.01)*

(86) International application number:
**PCT/JP2017/039884**

(87) International publication number:
**WO 2018/096914 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.11.2016 JP 2016227630**

(71) Applicant: **Shin-Etsu Chemical Co., Ltd.**
**Tokyo 100-0004 (JP)**

(72) Inventors:
- **YOSHII Ryosuke**
**Annaka-shi**
**Gunma 379-0224 (JP)**
- **MASUDA Kohei**
**Annaka-shi**
**Gunma 379-0224 (JP)**
- **HIGUCHI Koichi**
**Annaka-shi**
**Gunma 379-0224 (JP)**

(74) Representative: **Mewburn Ellis LLP**
**City Tower**
**40 Basinghall Street**
**London EC2V 5DE (GB)**

# (54) INORGANIC PARTICLE/SILOXANE COMPOSITE, METHOD FOR PRODUCING SAME, AND INORGANIC-PARTICLE-CONTAINING SILICONE COMPOSITION

(57) An inorganic particle/siloxane composite which comprises a product of cohydrolysis and cocondensation of (A) at least one compound or product selected from among silicon compounds represented by general formulae (1) to (4) and products of partial hydrolysis and condensation thereof and (B) inorganic particles which, when examined by the dynamic light scattering method, give a volume-based particle diameter distribution that has a 50%-cumulation particle diameter ($D_{50}$) of 3-100 nm, wherein the number of silicon atoms derived from the silicon compound represented by general formula (2) is 20 mol% or more of the number of all the silicon atoms in the component (A). The component (B) is contained in an amount of 65 mass% or less with respect to the whole product of cohydrolysis and cocondensation. The inorganic particle/siloxane composite has satisfactory compatibility with silicone materials although containing substantially no volatile organic solvent.

$Si(OR^1)_4$ (1)

$R^2Si(OR^1)_3$ (2)

$R^3R^4Si(OR^1)_2$ (3)

$R^5R^6R^7SiOR^1$ (4)

(In the formulae, $R^1$ represents a $C_{1-20}$ alkyl group, etc. and $R^2$ to $R^7$ each represent a $C_{1-20}$ alkyl group, etc.)

EP 3 546 497 A1

## Description

### TECHNICAL FIELD

This invention relates to an inorganic particle-siloxane composite, a method for preparing the same, and an inorganic particle-containing silicone composition.

### BACKGROUND

Silicone materials have been used in a variety of applications while taking advantage of excellent transparency and weather resistance of silicone.

Recent development efforts are made to impart a function such as light absorption, heat resistance, electric conduction or magnetism to conventional silicone materials. For example, Patent Document 1 discloses a UV-absorbing coating composition having a UV-absorbing organic molecule introduced therein.

In the preparation of functional silicone materials, the functional components to be introduced are generally divided into organic molecules and inorganic particles.

Many organic molecules are fully compatible with silicone materials so that highly transparent materials are obtainable. However, since organic molecules are less resistant to weathering, function degradation and discoloration during long-term service are unavoidable.

On the other hand, most inorganic particles exhibit weather resistance and minimize the risks of function degradation and discoloration during long-term service. However, since inorganic particles are less compatible with or dispersible in silicone materials, they tend to agglomerate, resulting in a substantial loss of transparency and function.

For the purpose of improving the dispersibility of inorganic particles, the means of modifying the particle surface with a substituent group having a large excluded volume to avoid direct contact between particles is regarded effective. It is recently reported to treat inorganic nanoparticles on their surface with a silane for thereby obtaining surface-treated inorganic nanoparticles having high dispersibility in organic solvents.

The inventors previously proposed in Patent Document 2 to react a water dispersion of titanium oxide nanoparticles coated with silicon oxide hydrate with a silane coupling agent, thereby obtaining an alcohol dispersion having a particle size of nano order.

Patent Document 3 discloses the method for the surface treatment of inorganic nanoparticles by reacting a methanol dispersion of the nanoparticles with a previously synthesized polysiloxane.

Although the nanoparticles obtained from these methods are highly dispersible in polar organic solvents such as alcohol and polyether solvents, the use of volatile organic solvents can provoke a worsening of the environment. The compatibility of nanoparticles with silicone materials is insufficient without the aid of polar organic solvents. Also, if the organic solvents are removed as by distillation, particles agglomerate together. It is thus difficult to obtain an inorganic particle-loaded silicone material of solventless type.

Patent Document 4 discloses the technique including the steps of grinding and mixing a polydimethylsiloxane having a reactive group at one end and inorganic particles in toluene solvent on a sand mill, thereby synthesizing inorganic nanoparticles having polydimethylsiloxane grafted to their surface, and feeding the resulting inorganic nanoparticles to a silicone encapsulant.

The grafting of polydimethylsiloxane to surfaces of inorganic nanoparticles is effective for improving the dispersibility of inorganic nanoparticles. The introduction of polydimethylsiloxane, however, tends to invite a reduction in hardness of silicone material. Additionally, there is the problem that unreacted polydimethylsiloxane oozes out on the surface without being taken into the material.

### PRIOR ART DOCUMENTS

### PATENT DOCUMENTS

Patent Document 1: JP 5353843
Patent Document 2: JP-A 2015-034106
Patent Document 3: WO 2013/094738
Patent Document 4: JP 5472543

## SUMMARY OF INVENTION

### TECHNICAL PROBLEM

An object of the invention, which has been made under the above-mentioned circumstances, is to provide an inorganic particle-siloxane composite which is fully compatible with silicone materials despite the substantial absence of volatile organic solvents, a silicone composition comprising the composite, and a coated article coated with a cured film of the silicone composition.

### SOLUTION TO PROBLEM

Making extensive investigations to attain the above object, the inventors have found that a specific inorganic particle-siloxane composite comprising a co-hydrolysate between an organosilicon compound and inorganic particles allows the inorganic particles to be dispersed in a silicone composition without increasing a volatile organic solvent, and that the resulting composition cures into a cured product which eliminates the risk of polysiloxane oozing out and has high transparency. The invention is predicated on this finding.
The invention is defined below.

1. An inorganic particle-siloxane composite comprising a co-hydrolytic condensate between (A) at least one compound selected from among silicon compounds having the general formulae (1) to (4) and partial hydrolytic condensates thereof and (B) inorganic particles having a 50% cumulative particle diameter ($D_{50}$) of 3 to 100 nm in volume basis particle size distribution as measured by the dynamic light scattering method,
wherein the number of silicon atoms derived from the silicon compound having formula (2) is at least 20 mol% of the total number of silicon atoms in component (A), and component (B) is present in an amount of up to 65% by weight of the overall co-hydrolytic condensate,

$$Si(OR^1)_4 \qquad (1)$$

$$R^2Si(OR^1)_3 \qquad (2)$$

$$R^3R^4Si(OR^1)_2 \qquad (3)$$

$$R^5R^6R^7SiOR^1 \qquad (4)$$

wherein $R^1$ is each independently hydrogen or a $C_1$-$C_{20}$ alkyl group, $R^2$ to $R^7$ are each independently hydrogen, or a $C_1$-$C_{20}$ alkyl, $C_6$-$C_{20}$ aryl or $C_7$-$C_{20}$ aralkyl group which may be substituted with a halogen, vinyl, allyl, acrylic or methacrylic moiety.
2. The inorganic particle-siloxane composite of 1 wherein said inorganic particles are particles of at least one metal oxide selected from among titanium oxide, aluminum oxide, cerium oxide, zinc oxide, indium oxide, zirconium oxide, tin oxide, manganese oxide, iron oxide, silicon oxide, and complexes thereof.
3. The inorganic particle-siloxane composite of 1 or 2 wherein said inorganic particles are of core/shell structure having a core in the form of a tetragonal titanium oxide solid solution nanoparticle having tin and/or manganese incorporated in solid solution, and a shell of silicon oxide around the core.
4. The inorganic particle-siloxane composite of any one of 1 to 3 wherein at least one of silicon-bonded alkoxy groups and hydroxyl groups is 0.2 to 1.5 molar equivalents relative to the total of silicon atoms derived from M, D and T units in the inorganic particle-siloxane composite.
5. A silicone composition comprising the inorganic particle-siloxane composite of any one of 1 to 4.
6. The silicone composition of 5, further comprising a volatile solvent free of silicon-bonded alkoxy groups and hydroxyl groups, the volatile solvent being present in an amount of less than 10% by weight.
7. The silicone composition of 5 or 6, further comprising (C) a catalyst capable of promoting hydrolytic condensation reaction.
8. A coating agent comprising the silicone composition of any one of 5 to 7.
9. A coated article comprising a substrate and a cured film formed of the coating agent of 8 on at least one surface of the substrate directly or via at least one layer.
10. A method for preparing an inorganic particle-siloxane composite, comprising the steps of:

($\alpha$) effecting co-hydrolytic condensation reaction between (A) at least one compound selected from among silicon compounds having the general formulae (1) to (4) and partial hydrolytic condensates thereof and (B)

inorganic particles having a 50% cumulative particle diameter ($D_{50}$) of 3 to 100 nm in volume basis particle size distribution as measured by the dynamic light scattering method, the inorganic particles being present as a dispersion in a polar organic solvent, and

(β) distilling off the organic solvent,

wherein the number of silicon atoms derived from the silicon compound having formula (2) is at least 20 mol% of the total number of silicon atoms in component (A), and the inorganic particles are blended in an amount of up to 65% by weight of the overall inorganic particle-siloxane composite,

$$Si(OR^1)_4 \qquad (1)$$

$$R^2Si(OR^1)_3 \qquad (2)$$

$$R^3R^4Si(OR^1)_2 \qquad (3)$$

$$R^5R^6R^7SiOR^1 \qquad (4)$$

wherein $R^1$ is each independently hydrogen or a $C_1$-$C_{20}$ alkyl group, $R^2$ to $R^7$ are each independently hydrogen, or a $C_1$-$C_{20}$ alkyl, $C_6$-$C_{20}$ aryl or $C_7$-$C_{20}$ aralkyl group which may be substituted with a halogen, vinyl, allyl, acrylic or methacrylic moiety.

11. The method of 10 wherein the polar organic solvent is at least one member selected from the group consisting of methanol, ethanol, isopropyl alcohol, and n-propyl alcohol.

12. The method of 10 or 11 wherein in step (α), hydrolytic condensation reaction is carried out in the presence of water while using a cation exchange resin as a catalyst for promoting co-hydrolytic condensation.

## ADVANTAGEOUS EFFECTS OF THE INVENTION

The inorganic particle-siloxane composite of the invention is fully compatible with silicone materials despite the substantial absence of volatile organic solvents. The composite allows inorganic particles to be dispersed in a silicone composition without increasing a volatile organic solvent.

The silicone composition comprising the inorganic particle-siloxane composite has the advantage that the composition cures into a product without the risk of polysiloxane oozing out, and the cured product has high transparency.

Using the silicone composition as a coating agent, there is obtained a coated article in which inorganic particles in the coating (or cured film) exert their function to a full extent.

## BRIEF DESCRIPTION OF DRAWINGS

FIG. 1 illustrates a UV/visible transmission spectrum of the cured film in Example 2-1.
FIG. 2 illustrates a UV/visible transmission spectrum of the cured film in Example 2-5.
FIG. 3 illustrates a UV/visible transmission spectrum of the cured film in Example 2-11.
FIG. 4 illustrates a UV/visible transmission spectrum of the cured film in Example 2-12.
FIG. 5 illustrates a UV/visible transmission spectrum of the cured film in Comparative Example 2-1.
FIG. 6 illustrates a UV/visible transmission spectrum of the cured film in Comparative Example 2-2.

## DESCRIPTION OF EMBODIMENTS

Now the invention is described in detail.

One embodiment of the invention is an inorganic particle-siloxane composite comprising a co-hydrolytic condensate between (A) at least one compound selected from among silicon compounds having the general formulae (1) to (4) and partial hydrolytic condensates thereof and (B) inorganic particles having a 50% cumulative particle diameter ($D_{50}$) of 3 to 100 nm in volume basis particle size distribution as measured by the dynamic light scattering method, wherein the number of silicon atoms derived from the silicon compound having formula (2) is at least 20 mol% of the total number of silicon atoms in component (A), and component (B) is present in an amount of up to 65% by weight of the overall co-hydrolytic condensate.

The inorganic particle-siloxane composite comprising a co-hydrolytic condensate of components (A) and (B) is considered to be a composite consisting of components (A) and (B) and having the structure that a hydrolytic condensate

of component (A) is bonded to at least a portion of the surface of an inorganic particle as component (B) via a siloxane linkage.

$Si(OR^1)_4$ (1)

$R^2Si(OR^1)_3$ (2)

$R^3R^4Si(OR^1)_2$ (3)

$R^5R^6R^7SiOR^1$ (4)

Herein $R^1$ is each independently hydrogen or a $C_1$-$C_{20}$ alkyl group, $R^2$ to $R^7$ are each independently hydrogen, or a $C_1$-$C_{20}$ alkyl, $C_6$-$C_{20}$ aryl or $C_7$-$C_{20}$ aralkyl group which may be substituted with a halogen atom, vinyl, allyl, acrylic or methacrylic moiety.

In the disclosure, unless otherwise stated, a siloxane unit derived from the compound having formula (1) is referred to as Q unit, a siloxane unit derived from the compound having formula (2) is referred to as T unit, a siloxane unit derived from the compound having formula (3) is referred to as D unit, and a siloxane unit derived from the compound having formula (4) is referred to as M unit.

In the formulae, the $C_1$-$C_{20}$ alkyl groups may be straight, branched or cyclic. Examples thereof include straight or branched alkyl groups such as methyl, ethyl, n-propyl, i-propyl, n-butyl, s-butyl, t-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and n-icosyl, and cycloalkyl groups such as cyclopropyl, cyclobutyl, cyclopentyl, cyclohexyl, cycloheptyl, and cyclooctyl.

Examples of the $C_6$-$C_{20}$ aryl group include phenyl, α-naphthyl and β-naphthyl.

Examples of the $C_7$-$C_{20}$ aralkyl group include benzyl and phenylethyl.

Of the foregoing, $R^1$ in formulae (1) to (4) is preferably hydrogen or $C_1$-$C_5$ alkyl, more preferably methyl.

$R^2$ to $R^7$ in formulae (1) to (4) are preferably $C_1$-$C_5$ alkyl or $C_6$-$C_{10}$ aryl groups, which may be substituted with a halogen atom, vinyl, allyl, acrylic or methacrylic moiety, more preferably methyl or phenyl. Particularly when $R^2$ to $R^7$ are methyl, an inorganic particle-siloxane composite having high shelf stability and heat resistance may be obtained. When some of $R^2$ to $R^7$ are phenyl, an inorganic particle-siloxane composite having a high affinity to phenyl base silicone materials may be obtained.

Suitable halogen atoms include fluorine, chlorine, bromine and iodine, with chlorine and fluorine being preferred.

Examples of the silicon compound having formula (1) include tetramethoxysilane, tetraethoxysilane, tetra(n-propoxy)silane, tetra(isopropoxy)silane, tetra(n-butoxy)silane, alkali silicates, and active silicic acid obtained from cation exchange of alkali silicates.

Examples of the silicon compound having formula (2) include methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, and γ-isocyanatopropyltriethoxysilane.

Examples of the silicon compound having formula (3) include dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silicon compound having formula (4) include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, n-decyldimethylethoxysilane, trimethylsilanol, triethylsilanol, n-propyldimethylsilanol, n-propyldiethylsilanol, isopropyldimethylsilanol, isopropyldiethylsilanol, propyldimethylsilanol, n-butyldimethylsilanol, n-hexyldimethylsilanol, n-pentyldimethylsilanol, and n-decyldimethylsilanol.

In the inorganic particle-siloxane composite of the invention, the silicon compounds having formulae (1) to (4)

may be used in combination of two or more as component (A), or partial hydrolytic condensates thereof may also be used as component (A).

In the practice of the invention, the content of constituent units derived from the compound having formula (2), that is, T units in component (A) is at least 20 mol% of the total number of silicon atoms in component (A), and the content is preferably at least 50 mol%, more preferably at least 80 mol%, and most preferably at least 90 mol%. If the content of units derived from the compound having formula (2) is less than 20 mol%, such a composite when added to a silicone composition may cause a hardness reduction and surface tack.

It is noted that the ratio of constituent units in a co-hydrolytic condensate of silicon compounds is ascertainable by the well-known method using the positions of signals and the integration ratios in $^{29}$Si-NMR (nuclear magnetic resonance).

The inorganic particle-siloxane composite has a weight average molecular weight (Mw) which is preferably 500 to 5,000, more preferably 800 to 3,000, even more preferably 900 to 2,500, though not particularly limited. A Mw in excess of 5,000 may lead to a higher viscosity to interfere with working, or poor shelf stability with a likelihood of gelation. A composite with a Mw of less than 500 is less compatible with polysiloxane materials, with the possibility that particles agglomerate together and settle down.

It is noted that Mw is measured by gel permeation chromatography (GPC) versus polystyrene standards.

The inorganic particle-siloxane composite contains at least one of silicon-bonded alkoxy groups and hydroxyl groups in an amount of preferably 0.2 to 1.5 molar equivalents, more preferably 0.3 to 1.2 molar equivalents relative to the total of silicon atoms derived from M, D and T units. If the amount is less than 0.2 molar equivalent, there is a possibility that when such a composite is added to a silicone composition, the composite is not incorporated in the cured product, causing the siloxane component to ooze out to the cured product surface. If the amount exceeds 1.5 molar equivalents, there is a possibility that when such a composite is added to a silicone composition, the cured product is susceptible to cracking because of an increased hardness.

The number of silicon-bonded alkoxy groups or hydroxyl groups is preferably determined from the signals and integration ratios in NMR spectrum.

For example, in $^{1}$H-NMR, protons on the carbon atom bonded to oxygen atom in an alkoxy group display peaks near 3.0 to 5.0 ppm, whereas protons on the carbon atom bonded to silicon atom display peaks near -1.0 to 1.0 ppm. Also, in $^{29}$Si-NMR, in the case of trifunctional polysiloxane (T unit), the amount of alkoxy may be determined by examining the proportions of (T0) through (T3). Since the detection magnetic field generally shifts to a higher magnetic field in the order of T3 > T2 > T1 > T0, the substitution number of alkoxy groups or hydroxyl groups may be estimated from the ratio of integrations of peaks.

[Chem. 1]

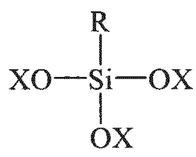
(T0)

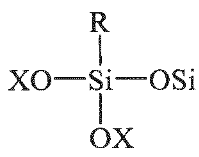
(T1)

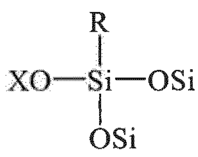
(T2)

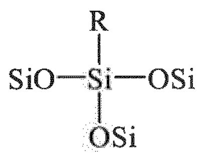
(T3)

Herein R is an organic group and X is hydrogen or an organic group.

The inorganic particles used herein as component (B) are preferably composed of Group 13 elements, Group 14 elements (exclusive of carbon), first row transition elements, second row transition elements, third row transition elements, and lanthanoids, though not limited thereto.

Of the Group 13 elements, oxides of aluminum, boron and indium are preferable.

Of the Group 14 elements (exclusive of carbon), metallic silicon particles and oxides of silicon and tin are preferable.

Of the first row transition elements, oxides of titanium, manganese and zinc are preferable. These oxides are often used as a certain wavelength light-absorbing material.

Of the second row transition elements, oxides of silver, yttrium and zirconium are preferable. These oxides are often used as a certain wavelength light-absorbing material and phosphor material.

Of the third row transition elements, oxides of gold, hafnium and tantalum are preferable.

Of the lanthanoids, oxides of lanthanum, cerium, praseodymium, neodymium, terbium, dysprosium, and ytterbium are preferable.

Preferred among these are particles of at least one metal oxide selected from titanium oxide, aluminum oxide, cerium oxide, zinc oxide, indium oxide, zirconium oxide, tin oxide, manganese oxide, iron oxide, silicon oxide, and complex oxides thereof.

Notably, composites of two or more of the metal elements and/or metal oxides may also be used, and these inorganic particles may be used singly or in combination of two or more types.

The inorganic particles used herein may also be core/shell particles consisting of a core of a metal element, a core of metal oxide, or a core of a complex of two or more metal elements or metal oxides as mentioned above and a shell of a metal oxide or a complex of two or more metal oxides around the core.

Examples of such inorganic particles include core/shell particles consisting of a core of particulate titanium oxide or zinc oxide and a shell of aluminum oxide, zirconium oxide or silicon oxide.

Typical of the preferred inorganic particles are core/shell type nanoparticles each consisting of a core in the form of a tetragonal titanium oxide solid-solution nanoparticle having tin and/or manganese incorporated in solid solution and a shell of silicon oxide around the core, as described in JP-A 2014-019611.

Titanium oxide generally includes three types, rutile, anatase and brookite types. Herein titanium oxide of tetragonal rutile type is used as solid-solution solvent for tin and manganese because it has a low photocatalytic activity and high UV absorptivity.

The tin component as a solute may be one derived from a tin salt. Included are tin oxide and tin chalcogenides such as tin sulfide, with tin oxide being preferred.

Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability.

Tin in the tin salt may have a valence of 2 to 4, with tetravalent tin being preferred.

The manganese component as a solute may be one derived from a manganese salt. Included are manganese oxide and manganese chalcogenides such as manganese sulfide, with manganese oxide being preferred.

Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability.

Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of preferably 10/1 to 1,000/1, more preferably 20/1 to 200/1.

The amount of manganese incorporated in solid solution is to provide a molar ratio of titanium to manganese (Ti/Mn) of preferably 10/1 to 1,000/1, more preferably 20/1 to 200/1.

If the amount of tin or manganese in solid solution form is to provide a Ti/Sn or Ti/Mn molar ratio of less than 10, there is observed considerable light absorption in the visible region assigned to tin and manganese. If the Ti/Sn or Ti/Mn molar ratio exceeds 1,000, photocatalytic activity is not fully deprived, and the crystal system may turn to anatase type having low UV absorptivity.

The solid solution form of tin and manganese components may be either substitutional or interstitial.

The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide.

The interstitial type tends to create F-center which causes coloring, and due to poor symmetry around a metal ion, the Franck-Condon factor of vibronic transition at the metal ion increases, leading to more absorption of visible light. For this reason, the substitution type is preferred.

A shell of silicon oxide is formed around the core of nanoparticulate tetragonal titanium oxide having tin and/or manganese incorporated in solid solution. The shell may contain silicon oxide as the major component and another component(s) such as tin, aluminum and the like.

The shell of silicon oxide may be formed by any desired techniques. For example, the silicon oxide shell may be formed by reacting an organic silicon compound or inorganic silicon compound to surfaces of titanium oxide nanoparticles.

Examples of the organic silicon compound which can be used herein include tetraalkoxysilanes. The silicon oxide shell may be formed outside nanoparticulate titanium oxide cores by hydrolytic condensation of a tetraalkoxysilane.

Suitable tetraalkoxysilanes include commonly available ones such as tetramethoxysilane, tetraethoxysilane, tetra(n-propoxy)silane, tetra(isopropoxy)silane, and tetra(n-butoxy)silane. Of these, tetraethoxysilane is preferred from the standpoints of reactivity and safety.

Commercially available tetraalkoxysilanes may be used, for example, tetraethoxysilane KBE-04 (Shin-Etsu Chemical Co., Ltd.).

Hydrolytic condensation of a tetraalkoxysilane may be performed in water, optionally in the presence of a condensation catalyst such as ammonia, aluminum salts, organoaluminum compounds, tin salts, or organotin compounds. Of these condensation catalysts, ammonia is especially preferred because it also serves as a dispersant for the core nanoparticles.

Examples of the inorganic silicon compound include alkali silicates and active silicic acids obtained from cation exchange of alkali silicates. The silicon oxide shell may be formed outside nanoparticulate titanium oxide cores by mixing titanium oxide nanoparticles with the inorganic silicon compound.

Suitable alkali silicates include sodium silicate and potassium silicate which are commonly available.

Commercially available alkali silicates may be used, for example, Soda Silicate (Fuji Kagaku Corp.).

The active silicic acid is obtained, for example, by contacting an alkali silicate aqueous solution with a cation exchange resin to induce cation exchange.

The raw material for the alkali silicate aqueous solution includes the above-mentioned alkali silicates. In this case too, commercially available Soda Silicate (Fuji Kagaku Corp.) may be used.

As the cation exchange resin, an appropriate one be selected from commonly available cation exchange resins, for example, Amberjet 1024H (Organo Corp.).

The method for contacting an alkali silicate aqueous solution with a cation exchange resin is, for example, by adding a strongly acidic cation exchange resin (H+ type) to a water dilution of alkali silicate aqueous solution, or by flowing a water dilution of alkali silicate aqueous solution through an ion exchange column filled with a strongly acidic cation exchange resin (H+ type).

Although the concentration of the alkali silicate aqueous solution is not particularly limited, it is preferred from the standpoints of production efficiency and anti-gelation of the active silicic acid obtained therefrom that the concentration is 1 to 10% by weight, more preferably 1 to 5% by weight, and even more preferably 2 to 4% by weight, calculated as silica.

The cation exchange treatment is preferably carried out such that the resulting active silicic acid solution may be at pH 1 to 5, more preferably pH 2 to 4.

The method for mixing the alkali silicate or active silicic acid with titanium oxide nanoparticles is, for example, by gradually adding an aqueous solution of alkali silicate or active silicic acid to a dispersion of titanium oxide nanoparticles although the method is not particularly limited.

The silicon oxide shells preferably account for 5 to 50%, more preferably 10 to 45%, and even more preferably 15 to 40% by weight based on the overall core/shell tetragonal titanium oxide solid solution particles. If the silicon oxide proportion is less than 5 wt%, then shell formation may be insufficient. If the silicon oxide proportion exceeds 50 wt%, then the nanoparticles tend to agglomerate together during shell formation.

The diameter of the inorganic particles may be measured by a variety of methods.

A 50% cumulative diameter ($D_{50}$) in a volume basis particle size distribution as measured by the dynamic light scattering method using laser light is used herein, but observation by electron microscopy is possible as supporting evidence. Although the value obtained by such measurement method is not dependent on a particular measurement system, for example, Nanotrac UPA-EX150 (Nikkiso Co., Ltd.) may be used in the dynamic light scattering method. Also, transmission electron microscope H-9500 (Hitachi High-Technologies Ltd.), for example, is used in the electron microscopy.

When the inorganic particles are added to a coating composition, for example, it is important that the coating composition be transparent in the visible region. Then the inorganic particles should preferably have a particle size ($D_{50}$) of 3 to 100 nm, more preferably 3 to 80 nm, even more preferably 3 to 60 nm, and most preferably 1 to 40 nm. If the inorganic particles have a $D_{50}$ in excess of 100 nm, sometimes noticeable scattering occurs. If $D_{50}$ is less than 3 nm, the inorganic particles have an extremely large overall surface area in the system, indicating difficult handling of inorganic particles.

In the practice of the invention, the inorganic particles are present in an amount of from more than 0% to 65% by weight, preferably from 5% to 65% by weight, more preferably from 10% to 65% by weight based on the inorganic particle-siloxane composite. If the proportion of the inorganic particle component is less than 5% by weight, which indicates a low relative weight fraction of inorganic particles in the inorganic particle-siloxane composite, the inorganic particles may fail to exert their function to a full extent. If the proportion of the inorganic particle component exceeds 65% by weight, the inorganic particles are likely to agglomerate together and settle down.

The amount of inorganic particles may be computed by determining the weight of the residue after thermogravimetric analysis (TGA) as the weight of the inorganic particles. For the TGA, an instrument Thermo Plus by Rigaku Corporation may be used. The analysis is preferably carried out in an inert atmosphere for preventing reaction with oxygen.

The inorganic particle-siloxane composite of the invention may be prepared by a method comprising the steps of ($\alpha$) effecting co-hydrolytic condensation reaction between (A) at least one compound selected from among silicon compounds having the general formulae (1) to (4) and partial hydrolytic condensates thereof and (B) inorganic particles having a 50% cumulative particle diameter ($D_{50}$) of 3 to 100 nm in volume basis particle size distribution as measured by the dynamic light scattering method, the inorganic particles being present as a dispersion in a polar organic solvent,

and (β) distilling off the organic solvent. At this point, the number of silicon atoms derived from the silicon compound having formula (2) is at least 20 mol% of the total number of silicon atoms in component (A), and the inorganic particles are blended in an amount of up to 65% by weight of the overall inorganic particle-siloxane composite.

In the preparation method, the inorganic particles are used in the form of a dispersion thereof in a polar organic solvent.

The polar organic solvent used herein is not particularly limited as long as it can be distilled off. Inter alia, methanol, ethanol, isopropyl alcohol, and n-propyl alcohol are preferred.

As the dispersion of inorganic particles in a polar organic solvent, any commercially available organo-silica sols or organo-titania sols may be used.

Alternatively, the dispersion may be prepared by combining well-known methods such as the method described in JP-A 2016-014132. For example, the dispersion may be prepared by a method involving the following steps (i) to (v):

step (i) of furnishing a water dispersion of inorganic particles,
step (ii) of reacting the water dispersion with a silicon compound to form a reaction mixture,
step (iii) of optionally diluting the reaction mixture with an organic solvent to form a dilute dispersion,
step (iv) of concentrating the reaction mixture or the dilute dispersion to form a concentrated dispersion, and
step (v) of replacing the solvent of any one of the concentrated dispersion, the dilute dispersion and the reaction mixture by a polar organic solvent.

Step (i)

Step (i) furnishes the water dispersion of inorganic particles, that is, a dispersion in which inorganic oxide particles preferably having a particle size $D_{50}$ in the range are dispersed in a dispersing medium such as water without agglomeration.

The water dispersion of inorganic particles may be prepared by disintegrating inorganic powder on a bead mill or the like or by any well-known method such as sol-gel method, or any commercially available dispersion may be used. Preferred is a dispersion of core/shell nanoparticles each consisting of a core of inorganic particle and a shell of silicon oxide around the core as mentioned above.

The concentration of inorganic particles in the water dispersion is preferably 1 to 35% by weight, more preferably 5 to 30% by weight, and even more preferably 10 to 25% by weight, from the standpoints of efficient manufacture and anti-gelation, though not limited thereto. As used herein, the concentration is a proportion of the weight of dispersoid in the overall water dispersion (the total weight of dispersoid and dispersing medium), as expressed in percent. The concentration may be determined by weighing a certain amount of the dispersion, evaporating the dispersing medium to dryness, and computing a weight change.

To the water dispersion, a basic substance or dispersant may be added. Examples include ammonia, lithium hydroxide, sodium hydroxide, potassium hydroxide, cesium hydroxide, monolithium dihydrogenphosphate, monosodium dihydrogenphosphate, monopotassium dihydrogenphosphate, monocesium dihydrogenphosphate, dilithium hydrogenphosphate, disodium hydrogenphosphate, dipotassium hydrogenphosphate, dicesium hydrogenphosphate, trilithium phosphate, trisodium phosphate, tripotassium phosphate, tricesium phosphate, lithium hydrogencarbonate, sodium hydrogencarbonate, potassium hydrogencarbonate, cesium hydrogencarbonate, lithium carbonate, sodium carbonate, potassium carbonate, and cesium carbonate. Inter alia, ammonia and sodium hydroxide are preferred. An appropriate amount of the basic substance added as dispersant is up to 1% by weight of the water dispersion.

The water dispersion thus constructed has high transparency. Specifically, when measured by transmitting light of wavelength 550 nm through a quartz cell having an optical path length of 1 mm which is filled with the water dispersion having a concentration of 1% by weight, the dispersion typically exhibits a transmittance of at least 80%, and in some cases, at least 90%. The transmittance is readily determined by UV/visible transmission spectroscopy.

Step (ii)

Step (ii) is to react the water dispersion with a silicon compound to form a reaction mixture. The preferred silicon compound used herein is a silane compound having the general formula (6) and/or a hydrolytic condensate thereof.

$$R^{12}_pR^{13}_qR^{14}_rSi(OR^{15})_{4-p-q-r} \qquad (6)$$

Herein $R^{12}$ is hydrogen or a substituted or unsubstituted, $C_1$-$C_{20}$ monovalent hydrocarbon group, $R^{13}$, $R^{14}$ and $R^{15}$ are each independently a $C_1$-$C_6$ alkyl group, p is an integer of 1 to 3, q is an integer of 0 to 2, r is an integer of 0 to 2, and the sum p+q+r is an integer of 1 to 3.

Examples of the silane compound having formula (6) wherein p=1 and q=r=0 include hydrogentrimethoxysilane,

hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, tris(3 -trimethoxysilylpropyl)isocyanurate and tris(3-triethoxysilylpropyl)isocyanurate having isocyanate groups bonded together, partial hydrolytic condensates of methyltrimethoxysilane (trade name KC-89S and X-40-9220 by Shin-Etsu Chemical Co., Ltd.), and partial hydrolytic condensates of methyltrimethoxysilane and γ-glycidoxypropyltrimethoxysilane (trade name X-41-1056 by Shin-Etsu Chemical Co., Ltd.).

Examples of the silane compound having formula (6) wherein p=1, q=1 and r=0 include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silane compound having formula (6) wherein p=1, q=1 and r=1 include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

From the aspect of preventing gelation and agglomeration, the amount of the silicon compound added is preferably 30 to 200% by weight, more preferably 50 to 150% by weight, and even more preferably 60 to 120% by weight, based on the solids content of the inorganic oxide water dispersion of step (i).

The mode of silicon compound addition may be dropwise addition in liquid, dropwise addition outside liquid, or addition in portions, with the dropwise addition in liquid being preferred.

From the aspect of preventing alteration by freezing or unexpected hydrolytic condensation reaction, the dispersion temperature is preferably kept at 0 to 45°C, more preferably 5 to 40°C, and even more preferably 10 to 35°C during addition of the silicon compound. Sometimes, the reaction solution may reach a temperature not higher than 70°C as a result of hydrolytic condensation.

Also a suitable reaction catalyst may be used in step (ii).

Step (iii)

Step (iii) is to dilute the reaction mixture from step (ii) with an organic solvent, if necessary. The dilution step is preferably involved to avoid solvent shock in the subsequent steps (iv) and (v), but not essential.

Preferred organic solvents include monohydric alcohols such as methanol, ethanol, isopropyl alcohol, n-propyl alcohol, and butanol; polyhydric alcohols such as ethylene glycol, propylene glycol and glycerol; ethers such as propylene glycol monomethyl ether, ethylene glycol monomethyl ether, glyme, and diglyme; ketones such as acetone and methyl isobutyl ketone; and esters such as ethyl acetate and propylene glycol monomethyl ether acetate. Inter alia, methanol, ethanol, isopropyl alcohol and n-propyl alcohol are more preferred.

From the aspect of fully exerting the solvent shock mitigating effect and reducing the treatment time of subsequent steps, the dilution factor is preferably 2 to 20 times, more preferably 3 to 15 times, and even more preferably 5 to 10 times by volume, but not limited thereto.

Step (iv)

Step (iv) is concentration to form a thick dispersion.

Concentration may be accomplished by such operation as heat concentration or ultrafiltration. Heat concentration is preferably carried out under reduced pressure. From the standpoints of bumping prevention and efficient evaporation, the pressure is preferably 1 to 760 mmHg, more preferably 5 to 300 mmHg.

Heating may be selected from conductive heat transfer, inductive heat transfer and radiant heat transfer. Preferred is radiant heat transfer using microwave radiation.

For ultrafiltration, a membrane having an appropriate pore size may be used. Suitable ultrafiltration membranes

or instruments which can be used herein are commercially available. Examples include Amicon Ultra (Merck Millipore), Microza (Asahikasei Chemicals), Ultrafilter Q0100, P0200, Q0500, and Q2000 (Advantec Toyo), Krauss-Maffei DCF Crossflow filter (Andritz KMPT GmbH), and Membralox (Noritake Co., Ltd.).

For ultrafiltration, a fractional molecular weight is preferably in the range of 10 to 300 kDa, more preferably 50 to 200 kDa, and even more preferably 70 to 150 kDa. The ultrafiltration membrane preferably has an average pore size of 5 to 30 nm, more preferably 5 to 20 nm, and even more preferably 6 to 15 nm.

Preferably, ultrafiltration is conducted under applied pressure. For efficient ultrafiltration, the applied pressure is preferably 0.01 to 1.0 MPa, more preferably 0.03 to 0.5 MPa, and even more preferably 0.05 to 0.3 MPa in gauge pressure. A pressure in excess of 1.0 MPa is acceptable as long as the structure is pressure resistant.

Pressure may also be applied by centrifugation. A filtration unit like Amicon Ultra (Merck Millipore) is adapted for centrifugal pressure application. In the case of a centrifuge with a spin radius of about 0.2 m, for example, a centrifugal force is preferably produced by spinning at 100 to 5,000 rpm, more preferably 200 to 3,000 rpm, and even more preferably 500 to 2,000 rpm.

In step (iv), the dispersion is optionally concentrated by removing the dispersing medium therefrom.

The dispersing medium includes water contained in the water dispersion furnished in step (i), the alcohol derived from silicate ester produced by hydrolytic condensation of the silicon compound added in step (ii), and the organic solvent added in step (iii). By exuding the dispersion of such complex system, the dispersion is preferably concentrated to a solids concentration of 1 to 30% by weight, more preferably 5 to 25% by weight, and even more preferably 10 to 20% by weight.

Step (v)

Step (v) is solvent replacement by a polar organic solvent. This step is preferably accomplished by such operation as heat concentration or ultrafiltration, and these operations may be performed under the same conditions as in step (iv).

Suitable polar organic solvents include monohydric alcohols such as methanol, ethanol, isopropyl alcohol, n-propyl alcohol, and butanol, polyhydric alcohols such as ethylene glycol, propylene glycol, and glycerol, ethers such as propylene glycol monomethyl ether, ethylene glycol monomethyl ether, glyme, and diglyme, ketones such as acetone and methyl isobutyl ketone, and esters such as ethyl acetate and propylene glycol monomethyl ether acetate. Inter alia, methanol, ethanol, isopropyl alcohol, and n-propyl alcohol are more preferred.

In view of positive solvent replacement and industrial efficiency, the volume of organic solvent used in step (v) is greater than the volume of the filtration chamber by a factor of preferably 1 to 20, more preferably 2 to 10, and even more preferably 3 to 8.

The step ($\alpha$) in the method for preparing the inorganic particle-siloxane composite according to the invention is to effect co-hydrolytic condensation reaction between the dispersion of inorganic particles in the polar organic solvent and component (A) in the co-present state.

Co-hydrolytic condensation may be carried out by any well-known method. Preferably hydrolytic reaction is carried out in water at pH 1 to 7.5, more preferably pH 2 to 7.

An acid catalyst may be added for adjusting pH to the desired range and promoting hydrolysis. Suitable catalysts include organic acids and inorganic acids such as hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, and cation exchange resins having carboxylic or sulfonic acid groups on the surface.

Preferably solid acid catalysts such as cation exchange resins are used because they are readily removed by filtration at the end of reaction. Suitable cation exchange resins include Amberlite (Organo Co., Ltd.), Lewatit (Lanxess), Purolite (Purolite), and Muromac (Muromachi Chemicals Inc.).

Although the amount of the acid catalyst added is not particularly limited, the amount is preferably 0.01 to 20% by weight, more preferably 0.1 to 10% by weight, even more preferably 1 to 5% by weight, based on the total solid weight of the inorganic particles and component (A), in view of proper control of a reaction rate.

In the hydrolytic reaction, the amount of water used is preferably 0.5 to 25 parts by weight, more preferably 3 to 15 parts by weight per 100 parts by weight of component (A), in view of production efficiency, dispersion of inorganic particles, and proper control of a reaction rate to prevent viscosity buildup or gelation.

It is noted that the addition of water to the reaction solution may be, for example, dropwise addition in liquid, or dropwise addition outside liquid. It is also acceptable to utilize concomitant water in the polar organic solvent dispersion of inorganic particles.

To produce the inorganic particle-siloxane composite, the hydrolytic reaction must be followed by condensation.

Condensation may be effected continuous to the hydrolysis and if desired, simultaneously in step ($\beta$) to be described later.

Condensation is typically effected under atmospheric or subatmospheric pressure, while maintaining the liquid

temperature at room temperature or heating at the boiling point of the solvent. For preventing the condensate from gelling, condensation at or below 120°C is preferred.

Condensation may be promoted by distilling off the alcohol formed by hydrolysis of alkoxy groups, under atmospheric or subatmospheric pressure.

Also for the purpose of promoting condensation, condensation catalysts such as basic compounds, acidic compounds or metal chelates may be added.

Step (β) is to distill off the polar organic solvent at the end of hydrolytic condensation.

The distillation of the polar organic solvent may be accomplished by such operation as heat concentration or ultrafiltration. These operations may be carried out under the same conditions as in step (iv).

It is noted that step (β) may be carried out simultaneously with the step of distilling off the alcohol by-produced during the hydrolytic condensation.

The inorganic particle-siloxane composite of the invention as described above is fully compatible with silicone. When mixed with a silicone composition, the composite prevents agglomeration of inorganic particles, maintains the composition transparent, and imparts the various functions (e.g., mar resistance, refractive index control, UV shielding, radiation shielding, and electric conduction) inherent to the inorganic particles. Therefore, the composite is advantageously used in the form of a silicone composition in admixture with a silicone resin or silicone rubber.

The inorganic particle-siloxane composite may be mixed with a silicone composition while minimizing the amount of a volatile solvent added.

Notably, the volatile solvent used herein is free of silicon-bonded alkoxy groups and hydroxyl groups. Examples include hydrocarbon compounds, alcohol compounds, ether compounds, ester compounds, ketone compounds, amide compounds, and cyclic siloxanes.

Preferred examples of the volatile solvent include monohydric alcohols such as methanol, ethanol, isopropyl alcohol, n-propyl alcohol and butanol; polyhydric alcohols such as ethylene glycol, propylene glycol and glycerol; ether compounds such as propylene glycol monomethyl ether, ethylene glycol monomethyl ether, glyme, and diglyme; ketone compounds such as acetone and methyl isobutyl ketone; ester compounds such as ethyl acetate and propylene glycol monomethyl ether acetate; amide compounds such as N,N-dimethylformamide and N,N-dimethylacetamide; cyclic siloxane compounds such as hexamethylcyclotrisiloxane and octamethylcyclotetrasiloxane. Inter alia, methanol, ethanol, isopropyl alcohol and n-propyl alcohol are more preferred.

The amount of the volatile solvent is preferably less than 10% by weight, more preferably up to 5% by weight, even more preferably up to 1% by weight of the overall silicone composition. Most preferably the volatile solvent is not contained.

The silicone composition may further contain as component (C) a catalyst capable of promoting hydrolytic condensation reaction of silicon-bonded alkoxy and hydroxyl groups. The curable silicone composition is advantageously used in sealing and coating applications.

Examples of the catalyst capable of promoting hydrolytic condensation reaction as component (C) include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, acetylacetonatotitanium, aluminum triisobutoxide, aluminum triisopropoxide, tris(acetylacetonato)aluminum, aluminum diisopropoxy(ethyl acetoacetate), aluminum perchlorate, aluminum chloride, cobalt octylate, (acetylacetonato)cobalt, (acetylacetonato)iron, (acetylacetonato)tin, dibutyltin octylate, and dibutyltin laurate; and acidic compounds such as p-toluenesulfonic acid and trichloroacetic acid. Of these, preference is given to sodium propionate, sodium acetate, sodium formate, trimethylbenzylammonium hydroxide, tetramethylammonium hydroxide, tris(acetylacetonato)aluminum, and aluminum diisopropoxy(ethyl acetoacetate).

The curing catalyst which is more effective for maintaining a silicone composition shelf stable and improving the cure behavior and crack resistance of the cured composition is an aromatic-free compound having the general formula (5).

$$[(R^8)(R^9)(R^{10})(R^{11})M]^+ \cdot X^- \qquad (5)$$

Herein $R^8$ to $R^{11}$ are each independently a $C_1$-$C_{18}$ alkyl group which may be substituted with halogen, each of $R^8$ to $R^{11}$ has a Taft-Dubois steric substituent constant Es, the total of constants Es of $R^8$ to $R^{11}$ is up to -0.5, M is an ammonium or phosphonium cation, and $X^-$ is a halide anion, hydroxide anion or $C_1$-$C_4$ carboxylate anion.

Taft-Dubois steric substituent constant Es is a rate of esterification reaction of a substituted carboxylic acid under acidic conditions relative to methyl group $CH_3$ and represented by the equation:

$$Es = \log(k/k_0)$$

wherein k is a rate of acidic esterification reaction of a substituted carboxylic acid under specific conditions and $k_0$ is a rate of acidic esterification reaction of methyl-substituted carboxylic acid under the same conditions. See J. Org. Chem., 45, 1164 (1980) and J. Org. Chem., 64, 7707 (1999).

In general, the Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In formula (5), the total of constants Es of $R^8$ to $R^{11}$ should preferably be equal to or more negative than -0.5. If the total of constants Es is above -0.5, a coating composition may become low in shelf stability and form a coat which can be cracked or whitened in a water-resistant test and loses adhesion, especially water-resistant adhesion and boiling adhesion. In the event the total of constants Es is above -0.5, for example, $R^8$ to $R^{11}$ are all methyl, a corresponding catalyst of formula (5) becomes higher in catalytic activity, but a coating composition comprising the same tends to lose shelf stability and a coat thereof becomes so hygroscopic as to develop defects in a water-resistant test. The total of constants Es of $R^8$ to $R^{11}$ is preferably not lower than -3.2, and more preferably not lower than -2.8.

In formula (5), $R^8$ to $R^{11}$ are alkyl groups of 1 to 18 carbon atoms, preferably 1 to 12 carbon atoms, which may be substituted with halogen, for example, alkyl groups such as methyl, ethyl, n-propyl, n-butyl, n-pentyl, n-hexyl, n-heptyl, and n-octyl; cycloalkyl groups such as cyclopentyl and cyclohexyl; and halo-substituted hydrocarbon groups such as chloromethyl, γ-chloropropyl and 3,3,3-trifluoropropyl.

$X^-$ is preferably a hydroxide anion or acetate anion.

Illustrative examples of the curing catalyst include hydroxides such as tetra-n-propylammonium hydroxide, tetra-n-butyl ammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; and salts of the foregoing hydroxides with halogenic acids or $C_1$-$C_4$ carboxylic acids. These may be used alone or in admixture of two or more, or in combination with any of the aforementioned well-known curing catalysts.

Inter alia, tetrapropylammonium hydroxide, tetrapropylammonium acetate, tetrabutylammonium hydroxide, tetrabutylammonium acetate, tetrabutylphosphonium hydroxide, and tetrabutylphosphonium acetate are preferred.

The amount of component (C) added is not particularly limited insofar as the amount is effective to cure the silicone compound. Specifically the curing catalyst is preferably used in an amount of 0.0001 to 30% by weight, more preferably 0.001 to 10% by weight, based on the solids of the overall silicone composition. Less than 0.0001 wt% of the catalyst may lead to under-cure and low hardness. More than 30 wt% of the catalyst may lead to a cured product which is prone to cracking or a composition having poor shelf stability.

The silicone composition of the invention is advantageously used as a coating composition. If necessary, additives may be added to the silicone composition insofar as they do not compromise the object and benefits of the invention. Exemplary of the additives are silicone resins, leveling agents, thickeners, pigments, dyes, powdered metals, antioxidants, UV absorbers, UV stabilizers, heat ray reflecting/absorbing agents, plasticizers, antistatic agents, antifouling agents, and water repellents.

A coated article may be obtained by coating the coating composition of the invention onto at least one surface of a substrate directly or via another layer of at least one type, and curing the composition to form a coating or film.

The substrate used herein is not particularly limited, and examples thereof include plastic moldings, wood base items, ceramics, glass, metals, and composites thereof.

These substrates which have been surface treated, specifically by conversion treatment, corona discharge treatment, plasma treatment, acid or alkaline treatment are also useful. Also included are decorative boards comprising a substrate and a surface layer which are coated with different paints. Particularly when a film of the coating composition is formed on a polycarbonate substrate, the polycarbonate substrate may be improved in mar resistance and weather resistance.

Also, a substrate having a functional layer previously formed thereon may be coated on the surface with the coating composition of the invention.

The functional layer may be a primer layer, rust-preventing layer, gas barrier layer, water-proof layer, or heat ray-shielding layer. Any one or more of these layers may be previously formed on the substrate.

The coated article having a film of the coating composition may be further covered on the film surface with one or more layers selected from a CVD layer (evaporated by chemical vapor deposition), hard coat layer, rust-preventing layer, gas barrier layer, water-proof layer, heat ray-shielding layer, antifouling layer, photocatalyst layer, and antistatic

layer.

The coated article on the surface opposed to the surface bearing a film of the coating composition may be further covered with one or more layers selected from a hard coat layer, rust-preventing layer, gas barrier layer, waterproof layer, heat ray-shielding layer, antifouling layer, photocatalyst layer, and antistatic layer.

The coating composition may be applied to the substrate by any of well-known coating techniques. Suitable coating techniques include brush coating, spray coating, dipping, flow coating, roll coating, curtain coating, spin coating, and knife coating.

The coating composition may be air dried by holding in air after coating or heated for reducing the cure time. The preferred coating composition is a composition which is curable by air drying, specifically a composition which forms a cured film on air drying at 25°C for 12 hours, more preferably a composition which forms a cured film within 5 hours on air drying at 25°C.

The coating composition of the invention is characterized by forming a cured film having high transparency. One index of transparency is a light transmittance in the UV-visible light region of a cured film.

In general, the light transmittance becomes lower as a film thickness increases. Thus a cured film of 1 to 100 μm thick formed by coating the coating composition onto a quartz substrate preferably exhibits a light transmittance of at least 90%, more preferably at least 95% at wavelength 500 nm. The transmittance of a cured film may be measured by a UV/visible light absorption spectral analyzer (spectrophotometer U-3900H by Hitachi High-Tech Science Corp.).

The coating composition of the invention can form a film endowed with a function corresponding to the properties of inorganic particles. In particular, a coated article in the form of an organic resin substrate coated with the coating composition loaded with a UV absorber such as titanium oxide is effective for improving the light stability and weather resistance of the organic resin substrate.

Weather resistance may be evaluated by a weathering test on a cured film to see whether or not the film changes its outer appearance. A scale of weather resistance may be evaluated by using EYE Super UV tester W-151 (Iwasaki Electric Co., Ltd.), irradiating UV light for a predetermined time, and determining a difference in weathering yellowness index ($\Delta YI' = YI^1 - YI^0$). For example, yellowness index is measured by a chromaticity meter Z-300A (Nippon Denshoku Industries Co., Ltd.). Provided that $YI^0$ is an initial yellowness index and $YI^1$ is a yellowness index after the test, a difference in weathering yellowness index is determined as $\Delta YI' = YI^1 - YI^0$ and used as an index of yellowing resistance. The yellowness index difference ($\Delta YI' = YI^1 - YI^0$) is preferably up to 10, more preferably up to 8, and even more preferably up to 5. A $\Delta YI'$ value in excess of 10 indicates an advance of yellowing, degradation of the substrate, and worsening of aesthetic appearance.

## EXAMPLES

Synthesis Examples, Examples and Comparative Examples are given below for further illustrating the invention, but the invention is not limited thereto.

The inorganic particle-siloxane composites prepared herein were evaluated for several properties by the following instruments and methods.

[1] Weight average molecular weight (Mw)

Mw was measured by gel permeation chromatography (GPC) in tetrahydrofuran elute versus polystyrene standards while preparing a tetrahydrofuran solution having a sample concentration of 1 wt% and using a gel permeation chromatograph by Tosoh Corp.

[2] Content of inorganic particles

The content of inorganic particles was computed by determining the weight of the residue after thermogravimetric analysis (TGA) of a sample as the weight of the inorganic particles in the sample and assigning the weight loss to the weight of polysiloxane component. For the TGA, an instrument Thermo Plus by Rigaku Corporation was used. The analysis was carried out by heating a platinum pan in a nitrogen atmosphere from 25°C to 900°C.

[3] Content of T units

The content of T units in overall component (A) was determined from the amount of silicon compound and partial hydrolytic condensate added as component (A). The amount of T unit silicon per unit weight of each silicon compound may be determined, for example, by weighing a compound having a known silicon content per unit weight, adding it as standard, performing $^{29}$Si-NMR spectroscopy, and computing a ratio of integration values.

[4] Contents of alkoxy and hydroxyl groups

Several droplets of pre-prepared 1M solution of chromium(III) acetylacetonate in deuterated chloroform (both by Kanto Chemical Co., Ltd.) were added to a deuterated chloroform solution having a sample concentration of 25 wt%. The solution was transferred to an NMR tube of PTFE with a diameter 10 mm and analyzed by $^{29}$Si-NMR spectroscopy using 300-MHz NMR spectrometer (JEOL Ltd.). Analytical conditions included gated decoupling, a pulse sequence of 45° pulses and pulse interval 6 seconds, a magnetic field strength 11.75 T, and a scan number of 3,000 times. For each of the signals assigned to silicon atoms having an alkoxy or hydroxyl group bonded thereto, a ratio of the total ($\Sigma OR^1$) of values obtained by multiplying the integrated value by the number of silicon-bonded alkoxy and hydroxyl groups to the total ($\Sigma Si^{MDT}$) of integrated values of signals assigned to silicon atoms in M, D and T units, ($\Sigma OR^1/\Sigma Si^{MDT}$) was determined as the content of alkoxy and hydroxyl groups.

(1) SYNTHESIS OF INORGANIC PARTICLE DISPERSION

Synthesis Example 1 Synthesis of water dispersion of inorganic particles (TW-1)

To 66.0 g of 36 wt% titanium(IV) chloride aqueous solution (trade name TC-36 by Ishihara Sangyo Kaisha, Ltd.) were added 3.3 g of 50 wt% tin(IV) chloride aqueous solution (Nihon Kagaku Sangyo Co., Ltd.) and 0.1 g of manganese(II) monoxide (Kojundo Chemical Lab. Co., Ltd.). They were thoroughly mixed and then diluted with 1,000 g of deionized water. In the resulting metal salt aqueous solution, the molar ratios of Ti to Sn and Mn were Ti/Sn=20 and Ti/Mn=100.

To the metal salt aqueous solution, 300 g of 5 wt% ammonia water (Wako Pure Chemical Corp.) was gradually added for neutralization and hydrolysis, yielding a precipitate of titanium hydroxide containing tin and manganese. The titanium hydroxide slurry was at pH 8.

The titanium hydroxide precipitate was deionized by repeating addition of deionized water and decantation. To the precipitate of titanium hydroxide containing tin and manganese after deionization treatment, 100 g of 30 wt% aqueous hydrogen peroxide (Wako Pure Chemical Corp.) was gradually added, whereupon stirring was continued at 60°C for 3 hours to effect full reaction. Thereafter, deionized water was added for concentration adjustment, yielding a translucent solution of tin and manganese-containing peroxotitanic acid (solids concentration 1 wt%). An autoclave of 500 mL volume (trade name TEM-D500 by Taiatsu Techno Co., Ltd.) was charged with 350 mL of the peroxotitanic acid solution synthesized above, which was subjected to hydrothermal reaction at 200°C and 1.5 MPa for 240 minutes. Thereafter, the reaction mixture in the autoclave was taken out via a sampling tube to a vessel in water bath at 25°C whereby the mixture was rapidly cooled to quench the reaction, obtaining a dispersion of titanium oxide solid solution nanoparticles. The dispersion of titanium oxide solid solution nanoparticles was dried at 105°C for 24 hours into a powder, which was analyzed by a powder X-ray diffractometer (D2 Phaser by Bruker AXS). The crystal phase was confirmed to be rutile type (tetragonal).

A separable flask equipped with a magnetic stirrer and thermometer was charged with 1,000 parts by weight of the titanium oxide solid solution nanoparticle dispersion, 100 parts by weight of ethanol, and 2.0 parts by weight of ammonia at room temperature (25°C), followed by magnetic stirring. The separable flask was placed in an ice bath and cooled until the temperature of the contents reached 5°C. 18 parts by weight of tetraethoxysilane (trade name KBE-04 by Shin-Etsu Chemical Co., Ltd.) was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The mixture was filtered by qualitative filter paper (Advantec 2B), obtaining a dilute colloidal solution. The dilute colloidal solution was concentrated by ultrafiltration to 8.8 wt%, yielding a water dispersion of core/shell type inorganic particles (TW-1). The dispersion (TW-1) was analyzed for particle size $D_{50}$ by the dynamic light scattering method (trade name Nanotrac by Nikkiso Co., Ltd.), finding $D_{50}$ = 17.9 nm. The proportion of silicon oxide shell in the overall core/shell particles was 18.0 wt% calculated as $SiO_2$.

Synthesis Example 2 Synthesis of ethanol dispersion of inorganic particles (TE-1)

A four neck 2-L separable flask equipped with a Dimroth condenser, nitrogen inlet tube, thermometer and impeller was charged with 300 g of the dispersion of core/shell type tetragonal titanium oxide nanoparticles (TW-1, solids concentration 8.8 wt%) obtained in Synthesis Example 1 and 3 g of a sulfonic acid base cationic ion exchange resin as catalyst. 225 g of methyltrimethoxysilane (trade name KBM-13 by Shin-Etsu Chemical Co., Ltd.) was fed to the dispersion, followed by vigorous stirring at 250 rpm. It was observed that stirring caused the dispersion to react with the alkoxysilane until the mixture became uniform. It was also observed that the dispersion temperature rose from 25°C to 52°C. Heat stirring was continued for 2 hours so that the dispersion was kept at a temperature of 50°C. With stirring at 250 rpm,

750 g of ethanol was added to the dispersion for dilution. The dilute dispersion was fed into a ultrafilter, from which 800 g of an exudate was taken out. To the concentrated dispersion, ethanol was continuously supplied under pressure. The exudation behavior of the dispersion was observed. With a receiver (5,000 mL) attached to the discharge port of the filter, the supply of ethanol under pressure was continued until the exudate reached 800 g. The dispersion was taken out of the filtration chamber, obtaining an ethanol dispersion of inorganic particles (TE-1). The dispersion (TE-1) had a solids concentration of 15.0 wt% and a water concentration of 1.1 wt%. The dispersion (TE-1) was analyzed for particle size $D_{50}$ by the dynamic light scattering method, finding $D_{50}$ = 9.9 nm.

(2) SYNTHESIS OF INORGANIC PARTICLE-SILOXANE COMPOSITE

Example 1-1 Synthesis of inorganic particle-siloxane composite (SS-1)

A four neck 2-L separable flask equipped with a Dimroth condenser, nitrogen inlet tube, thermometer and impeller was charged with 100 g of an isopropyl alcohol dispersion of silicon oxide (IPA-ST, solids concentration 30.0 wt%, particle size 12.3 nm, water content 0.7 wt%) and 0.1 g of a sulfonic acid base cationic ion exchange resin as catalyst. The dispersion was heated under reflux for 2 hours. With the dispersion temperature kept below 70°C, 70 g of a partial condensate of methyltrimethoxysilane (KC-89 by Shin-Etsu Chemical Co., Ltd.) was added. Thereafter, isopropyl alcohol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (SS-1). On thermogravimetric analysis, the content of inorganic particles was 48 wt% based on the overall inorganic particle-siloxane composite.

Example 1-2 Synthesis of inorganic particle-siloxane composite (TS-1)

A four neck 2-L separable flask equipped with a Dimroth condenser, nitrogen inlet tube, thermometer and impeller was charged with 200 g of an ethanol dispersion of inorganic particles (TE-1, solids concentration 15.0 wt%) and 0.3 g of a sulfonic acid base cationic ion exchange resin as catalyst. The dispersion was heated under reflux for 2 hours. With the dispersion temperature kept below 70°C, 70 g of a partial condensate of methyltrimethoxysilane (KC-89 by Shin-Etsu Chemical Co., Ltd.) was added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-1). On TGA, the content of inorganic particles was 28 wt% based on the overall inorganic particle-siloxane composite.

Example 1-3 Synthesis of inorganic particle-siloxane composite (TS-2)

A four neck 2-L separable flask equipped with a Dimroth condenser, nitrogen inlet tube, thermometer and impeller was charged with 200 g of an ethanol dispersion of titanium oxide nanoparticles (TE-1, solids concentration 15.0 wt%), 4 g of deionized water, and 0.3 g of a sulfonic acid base cationic ion exchange resin as catalyst. The dispersion was heated under reflux for 2 hours. With the dispersion temperature kept below 70°C, 70 g of a partial condensate of methyltrimethoxysilane (KC-89 by Shin-Etsu Chemical Co., Ltd.) was added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-1). On TGA, the content of inorganic particles was 39 wt% based on the overall inorganic particle-siloxane composite.

Example 1-4 Synthesis of inorganic particle-siloxane composite (TS-3)

The same procedure as in Example 1-3 was repeated aside from changing the amount of deionized water to 6 g. There was obtained an inorganic particle-siloxane composite (TS-3). On TGA, the content of inorganic particles was 47 wt% based on the overall inorganic particle-siloxane composite.

Example 1-5 Synthesis of inorganic particle-siloxane composite (TS-4)

The same procedure as in Example 1-3 was repeated aside from changing the amount of deionized water to

7 g. There was obtained an inorganic particle-siloxane composite (TS-4). On TGA, the content of inorganic particles was 52 wt% based on the overall inorganic particle-siloxane composite.

Example 1-6 Synthesis of inorganic particle-siloxane composite (TS-5)

The same procedure as in Example 1-3 was repeated aside from changing the amount of deionized water to 8 g. There was obtained an inorganic particle-siloxane composite (TS-5). On TGA, the content of inorganic particles was 59 wt% based on the overall inorganic particle-siloxane composite.

Example 1-7 Synthesis of inorganic particle-siloxane composite (TS-6)

A four neck 2-L separable flask equipped with a Dimroth condenser, nitrogen inlet tube, thermometer and impeller was charged with 50 g of an ethanol dispersion of inorganic particles (TE-1, solids concentration 15.0 wt%), 2 g of deionized water, and 0.1 g of a sulfonic acid base cationic ion exchange resin as catalyst. The dispersion was heated under reflux for 2 hours. With the dispersion temperature kept below 70°C, 5 g of a partial condensate of methyltrimethoxysilane (KC-89 by Shin-Etsu Chemical Co., Ltd., T unit silicon $4.2\times10^{-2}$ mol) and 15 g of dimethyldimethoxysilane (KBM-22 by Shin-Etsu Chemical Co., Ltd., D unit silicon $12.5\times10^{-2}$ mol) were added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-6). On TGA, the content of inorganic particles was 52 wt% based on the overall inorganic particle-siloxane composite.

Example 1-8 Synthesis of inorganic particle-siloxane composite (TS-7)

A four neck 2-L separable flask equipped with a Dimroth condenser, nitrogen inlet tube, thermometer and impeller was charged with 50 g of an ethanol dispersion of inorganic particles (TE-1, solids concentration 15.0 wt%), 2 g of deionized water, and 0.1 g of a sulfonic acid base cationic ion exchange resin as catalyst. The dispersion was heated under reflux for 2 hours. With the dispersion temperature kept below 70°C, 10 g of a partial condensate of methyltrimethoxysilane (KC-89 by Shin-Etsu Chemical Co., Ltd., T unit silicon $8.3\times10^{-2}$ mol) and 10 g of dimethyldimethoxysilane (KBM-22 by Shin-Etsu Chemical Co., Ltd., D unit silicon $8.3\times10^{-2}$ mol) were added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-7). On TGA, the content of inorganic particles was 42 wt% based on the overall inorganic particle-siloxane composite.

Example 1-9 Synthesis of inorganic particle-siloxane composite (TS-8)

A four neck 2-L separable flask equipped with a Dimroth condenser, nitrogen inlet tube, thermometer and impeller was charged with 50 g of an ethanol dispersion of inorganic particles (TE-1, solids concentration 15.0 wt%), 2 g of deionized water, and 0.1 g of a sulfonic acid base cationic ion exchange resin as catalyst. The dispersion was heated under reflux for 2 hours. With the dispersion temperature kept below 70°C, 17 g of a partial condensate of methyltrimethoxysilane (KC-89 by Shin-Etsu Chemical Co., Ltd., T unit silicon $1.4\times10^{-1}$ mol), 1 g of dimethyldialkoxysilane (KBM-22 by Shin-Etsu Chemical Co., Ltd., D unit silicon $8.3\times10^{-3}$ mol), 1 g of trimethylmethoxysilane (KBM-31 by Shin-Etsu Chemical Co., Ltd., M unit silicon $9.6\times10^{-3}$ mol), and 1 g of tetramethoxysilane (KBM-04 by Shin-Etsu Chemical Co., Ltd., Q unit silicon $6.6\times10^{-3}$ mol) were added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-8). On TGA, the content of inorganic particles was 48 wt% based on the overall inorganic particle-siloxane composite.

Example 1-10 Synthesis of inorganic particle-siloxane composite (TS-9)

A four neck 2-L separable flask equipped with a Dimroth condenser, nitrogen inlet tube, thermometer and impeller was charged with 250 g of an ethanol dispersion of inorganic particles (TE-1, solids concentration 15.0 wt%), 1 g of deionized water, and 0.1 g of a sulfonic acid base cationic ion exchange resin as catalyst. The dispersion was

heated under reflux for 2 hours. With the dispersion temperature kept below 70°C, 20 g of a partial condensate of methyltrimethoxysilane (KC-89 by Shin-Etsu Chemical Co., Ltd.) was added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-9). On TGA, the content of inorganic particles was 63 wt% based on the overall inorganic particle-siloxane composite.

Comparative Example 1-1 Synthesis of inorganic particle-siloxane composite (TS-10)

A four neck 2-L separable flask equipped with a Dimroth condenser, nitrogen inlet tube, thermometer and impeller was charged with 350 g of an ethanol dispersion of inorganic particles (TE-1, solids concentration 15.0 wt%), 1 g of deionized water, and 0.1 g of a sulfonic acid base cationic ion exchange resin as catalyst. The dispersion was heated under reflux for 2 hours. With the dispersion temperature kept below 70°C, 20 g of a partial condensate of methyltrimethoxysilane (KC-89 by Shin-Etsu Chemical Co., Ltd.) was added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. Gelation occurred, failing to obtain a dispersion.

Comparative Example 1-2 Synthesis of inorganic particle-siloxane composite (TS-11)

A four neck 2-L separable flask equipped with a Dimroth condenser, nitrogen inlet tube, thermometer and impeller was charged with 50 g of an ethanol dispersion of titanium oxide nanoparticles (TE-1, solids concentration 15.0 wt%), 2 g of deionized water, and 0.1 g of a sulfonic acid base cationic ion exchange resin as catalyst. The dispersion was heated under reflux for 2 hours. With the dispersion temperature kept below 70°C, 2 g of a partial condensate of methyltrimethoxysilane (KC-89 by Shin-Etsu Chemical Co., Ltd., T unit silicon $1.7\times10^{-2}$ mol) and 18 g of dimethyldimethoxysilane (KBM-22 by Shin-Etsu Chemical Co., Ltd., D unit silicon $1.5\times10^{-1}$ mol) were added. Thereafter, ethanol and methanol formed by hydrolysis were distilled off under atmospheric pressure. Subsequently, the dispersion was stirred for 1 hour from the point of time when its temperature exceeded 100°C, and then cooled to room temperature. The ion exchange resin was removed by pressure filtration, and the residual alcohol was completely removed by vacuum distillation. There was obtained an inorganic particle-siloxane composite (TS-11). On TGA, the content of inorganic particles was 47 wt% based on the overall inorganic particle-siloxane composite.

Comparative Example 1-3 Synthesis of mixture of inorganic particles and silicone resin

A four neck 2-L separable flask equipped with a Dimroth condenser, nitrogen inlet tube, thermometer and impeller was charged with 100 g of an ethanol dispersion of inorganic particles (TE-1, solids concentration 15.0 wt%) and 100 g of a solventless silicone resin-based coating composition (KR-500 by Shin-Etsu Chemical Co., Ltd.). Thereafter, ethanol was distilled off in vacuum, obtaining a mixture of inorganic particles and siloxane (solids concentration 15.0 wt%).

The composites prepared in Examples 1-1 to 1-10 and Comparative Example 1-2 and the mixture prepared in Comparative Example 1-3 were analyzed, with the results shown in Table 1.

Table 1

| | Mw | Content of inorganic particles (wt%) | T unit content (mol%) | Content of alkoxy and hydroxyl groups ($OR^1/Si^{MDT}$ mol ratio) |
|---|---|---|---|---|
| Example 1-1 | 970 | 48 | 100 | 1.27 |
| Example 1-2 | 980 | 28 | 100 | 1.17 |
| Example 1-3 | 1,400 | 39 | 100 | 0.88 |
| Example 1-4 | 1,400 | 47 | 100 | 0.90 |
| Example 1-5 | 1,800 | 52 | 100 | 0.73 |
| Example 1-6 | 2,300 | 59 | 100 | 0.62 |
| Example 1-7 | 1,200 | 52 | 25 | 0.52 |

(continued)

| | Mw | Content of inorganic particles (wt%) | T unit content (mol%) | Content of alkoxy and hydroxyl groups ($OR^1/Si^{MDT}$ mol ratio) |
|---|---|---|---|---|
| Example 1-8 | 1,400 | 42 | 50 | 0.66 |
| Example 1-9 | 1,600 | 48 | 85 | 0.72 |
| Example 1-10 | 1,100 | 63 | 100 | 0.43 |
| Comparative Example 1-2 | 1,300 | 47 | 10 | 0.59 |
| Comparative Example 1-3 | 2,400 | 15 | 100 | 0.78 |

In all the inorganic particle-siloxane composite dispersions of Examples 1-1 to 1-10, neither agglomeration of inorganic particles nor white turbidity was observed, demonstrating that inorganic particles were uniformly dispersed.

As seen from Table 1, in Examples 1-2 to 1-6, as the water content in the ethanol dispersion of inorganic particles as the raw material is increased, Mw and the content of inorganic particles increase and the content of alkoxy groups decreases. This indicates that as the water content in the raw material dispersion increases, hydrolytic condensation of alkoxysilane runs more.

In Examples 1-7 to 1-9, a silicon component other than T units was introduced as a polysiloxane component. In Example 1-10, inorganic particles were introduced in an amount of 63 wt% of the inorganic particle-siloxane composite.

In Comparative Example 1-1, inorganic particles were introduced in an amount of 72 wt% of the overall inorganic particle-siloxane composite. Since the reaction system gelled, the composite could not be isolated. This is because inorganic particles introduced in a high concentration act as crosslinking sites.

In Comparative Example 1-2, a composite having a T unit content below the range of the invention were prepared.

In Comparative Example 1-3, a mixture of a solventless coating composition based on a silicone resin and inorganic particles was prepared.

(3) PREPARATION OF COATING COMPOSITION AND CURED FILM

Example 2-1

An inorganic particle-loaded coating composition was prepared by mixing 1.0 g of the inorganic particle-siloxane composite (SS-1, inorganic particle concentration 48 wt%) synthesized in Example 1-1 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film. FIG. 1 illustrates a UV/visible light transmission spectrum of the coated substrate.

Example 2-2

An inorganic particle-loaded coating composition was prepared by mixing 1.8 g of the inorganic particle-siloxane composite (TS-1, inorganic particle concentration 28 wt%) synthesized in Example 1-2 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-3

An inorganic particle-loaded coating composition was prepared by mixing 1.6 g of the inorganic particle-siloxane composite (TS-2, inorganic particle concentration 32 wt%) synthesized in Example 1-3 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-4

An inorganic particle-loaded coating composition was prepared by mixing 1.1 g of the inorganic particle-siloxane composite (TS-3, inorganic particle concentration 47 wt%) synthesized in Example 1-4 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-5

An inorganic particle-loaded coating composition was prepared by mixing 1.0 g of the inorganic particle-siloxane composite (TS-4, inorganic particle concentration 52 wt%) synthesized in Example 1-5 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film. FIG. 2 illustrates a UV/visible light transmission spectrum of the coated substrate.

Example 2-6

An inorganic particle-loaded coating composition was prepared by mixing 0.8 g of the inorganic particle-siloxane composite (TS-5, inorganic particle concentration 59 wt%) synthesized in Example 1-6 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-7

An inorganic particle-loaded coating composition was prepared by mixing 1.0 g of the inorganic particle-siloxane composite (TS-6, inorganic particle concentration 52 wt%) synthesized in Example 1-7 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-8

An inorganic particle-loaded coating composition was prepared by mixing 1.2 g of the inorganic particle-siloxane composite (TS-7, inorganic particle concentration 42 wt%) synthesized in Example 1-8 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-9

An inorganic particle-loaded coating composition was prepared by mixing 1.0 g of the inorganic particle-siloxane composite (TS-8, inorganic particle concentration 48 wt%) synthesized in Example 1-9 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-10

An inorganic particle-loaded coating composition was prepared by mixing 0.8 g of the inorganic particle-siloxane composite (TS-9, inorganic particle concentration 63 wt%) synthesized in Example 1-10 with 10 g of a solventless coating

composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

Example 2-11

An inorganic particle-loaded coating composition was prepared by mixing 1.0 g of the inorganic particle-siloxane composite (TS-4, inorganic particle concentration 52 wt%) synthesized in Example 1-5 with 10 g of a solventless coating composition based on a silicone resin (KR-400 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film. FIG. 3 illustrates a UV/visible light transmission spectrum of the coated substrate.

Example 2-12

An inorganic particle-loaded coating composition was prepared by mixing 2.5 g of the inorganic particle-siloxane composite (TS-4, inorganic particle concentration 52 wt%) synthesized in Example 1-5 with 10 g of a solventless coating composition based on a silicone resin (KR-500 by Shin-Etsu Chemical Co., Ltd.) and 0.2 g of a titanium catalyst (D20 by Shin-Etsu Chemical Co., Ltd.). It was confirmed that inorganic particles were transparently dispersed in the coating composition without agglomeration.

The thus prepared coating composition was flow coated on a quartz substrate and allowed to stand at 23°C for 24 hours, obtaining a cured film. FIG. 4 illustrates a UV/visible light transmission spectrum of the coated substrate.

Comparative Example 2-1

An inorganic particle-loaded coating composition was prepared by mixing 2.0 g of the mixture of inorganic particles and silicone resin (inorganic particle concentration 15 wt%) prepared in Comparative Example 1-3 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film. FIG. 5 illustrates a UV/visible light transmission spectrum of the coated substrate.

Comparative Example 2-2

An inorganic particle-loaded coating composition was prepared by mixing 1.7 g of inorganic particles with 10 g of a solventless coating composition based on a silicone resin (X-40-2327 by Shin-Etsu Chemical Co., Ltd.). The inorganic particles were complex oxide nanoparticles (RTTDNB 15 wt%-E88 by CIK Nanotech Co., core/shell type cobalt-in-solid-solution titanium oxide solid solution dispersion obtained by preparing titanium oxide nanoparticles having cobalt incorporated in solid solution (4 mol% cobalt relative to 100 mol% titanium) by the DC arc plasma method, coating the nanoparticles with an alumina/zirconia-containing coating, surface treating with methyltrimethoxysilane, and dispersing the coated nanoparticles in an alcohol mixture with the aid of a polymeric dispersant; solids concentration 15 wt%). There was detected white turbidity due to agglomeration of inorganic particles in the silicone resin.

The thus prepared coating composition was flow coated on a quartz substrate and allowed to stand at 23°C for 24 hours, obtaining a cured film. FIG. 6 illustrates a UV/visible light transmission spectrum of the coated substrate.

Comparative Example 2-3

An inorganic particle-loaded coating composition was prepared by mixing 1.1 g of the inorganic particle-siloxane composite (TS-11, inorganic particle concentration 47 wt%) synthesized in Comparative Example 1-2 with 10 g of a solventless coating composition based on a silicone resin (X-40-2327 by Shin-Etsu Chemical Co., Ltd.). It was confirmed that inorganic particles were transparently dispersed in the coating liquid without agglomeration.

The thus prepared coating composition was flow coated on a quartz substrate and allowed to stand at 23°C for 24 hours, obtaining a cured film.

The cured films of Examples 2-1 to 2-12 and Comparative Examples 2-1 to 2-3 were measured and evaluated for visible light transmission and tack by the following tests. The results are shown in Table 2.

[1] Visible light transmission

The light transmittance at wavelength 500 nm of a coated substrate was measured by a spectrophotometer (U-3900H, Hitachi High-Tech Science Corp.), provided that the transmittance of the uncoated quartz substrate was the base line.

[2] Tack

The quartz substrate having a coating composition coated thereon was rated NG (X) when oozing in outer appearance of the cured film or surface tack attributable to the uncured component was observed, or OK (O) when neither oozing nor tack was observed.

Table 2

| | Visible light transmittance (%) | Tack |
|---|---|---|
| Example 2-1 | 100 | ○ |
| Example 2-2 | 93 | ○ |
| Example 2-3 | 95 | ○ |
| Example 2-4 | 95 | ○ |
| Example 2-5 | 100 | ○ |
| Example 2-6 | 100 | ○ |
| Example 2-7 | 98 | ○ |
| Example 2-8 | 100 | ○ |
| Example 2-9 | 100 | ○ |
| Example 2-10 | 99 | ○ |
| Example 2-11 | 93 | ○ |
| Example 2-12 | 95 | ○ |
| Comparative Example 2-1 | 78 | ○ |
| Comparative Example 2-2 | 24 | ○ |
| Comparative Example 2-3 | 100 | X |

As is evident from Table 2, the cured films obtained from the coating composition of Comparative Example 2-1 which is obtained by simply mixing the silicone composition with inorganic particles and the coating composition of Comparative Example 2-2 which is obtained by adding complex oxide nanoparticle dispersion dispersed in an organic solvent display white turbidity and a light transmittance at wavelength 500 nm of 24% in the UV/visible light transmission spectrum, indicating a substantial loss of transparency.

In contrast, the coating compositions of Examples 2-1 to 2-12 which contain the inorganic particle-siloxane composites prepared in Examples 1-1 to 1-10 display uniform dispersion of inorganic particles in the coating composition because neither agglomeration of silicon oxide or titanium oxide nor white turbidity is observed. The cured films of Examples 2-1 to 2-12 have a light transmittance at wavelength 500 nm of at least 90% as a result of measurement of UV/visible light transmission spectrum, indicating a high transparency. In addition, the cured film of the coating composition having titanium oxide-containing inorganic particles introduced therein shows UV absorption characteristic of titanium oxide. In Examples 2-2 to 2-6, as the water content in the ethanol dispersion of inorganic particles as the raw material increases, the light transmittance of the coating increases. This indicates that the coating of particle surface with polysiloxane proceeds to a higher degree with the increasing water content, and accordingly, the dispersion in the silicone coating composition is improved.

In Examples 2-11 and 2-12, a coating composition is prepared by adding a titanium oxide dispersion to a solventless silicone coating composition other than X-41-2327, and measured for UV/visible light transmission spectrum. As a result, all samples show a light transmittance of at least 90% at wavelength 500 nm, indicating high transparency.

It is evident from the foregoing that the inorganic particle-siloxane composite obtained according to the invention is fully dispersible in silicone-based coating compositions. Furthermore, the coating compositions of Example 2-7 (T unit

content: 25 mol%), Example 2-8 (T unit content: 50 mol%), and Example 2-9 (T unit content: 85 mol%), using inorganic particle-siloxane composite having silicon units other than T unit introduced partially in polysiloxane, show a light transmittance of at least 90% at wavelength 500 nm in UV/visible light transmission spectrum, indicating high transparency as well as satisfactory cure.

In contrast, the coating composition of Comparative Example 2-3 using inorganic particle-siloxane composite containing excessive D units (T unit content: 10 mol%) forms a coating having high transparency, but oozing of siloxane component is observed on the film surface, causing the surface tack of the film. This is because the polysiloxane in the inorganic particle-siloxane composite becomes less reactive due to the presence of excessive D units, and thus oozes out on the film surface without reacting with the silicone resin in the coating composition.

As is evident from the above results, the addition of the dispersion according to the invention to various coating compositions ensures that inorganic nanoparticles are introduced into silicone compositions without a need to increase the amount of volatile organic solvent and without detracting from the transparency of a coating or film.

(4) PREPARATION OF LAMINATES

Example 3-1

A primer (PC-7A by Shin-Etsu Chemical Co., Ltd.) was flow coated onto a polycarbonate substrate (PC-1600 by Takiron Corp.) and heated at 120°C for 1 hour to form a primer layer. The coating composition prepared in Example 2-5 was flow coated onto the primer layer and allowed to stand at room temperature for 1 day, obtaining a laminate having a cured film.

Example 3-2

A laminate was obtained as in Example 3-1 aside from using the coating composition prepared in Example 2-11 instead of the coating composition prepared in Example 2-5.

Example 3-3

A laminate was obtained as in Example 3-1 aside from using the coating composition prepared in Example 2-12 instead of the coating composition prepared in Example 2-5.

Comparative Example 3-1

A laminate was obtained as in Example 3-1 aside from using a solventless coating composition based on silicone resin (KR-400 by Shin-Etsu Chemical Co., Ltd.) instead of the coating composition prepared in Example 2-5.

Comparative Example 3-2

A laminate was obtained as in Example 3-1 aside from using a solventless silicone-base coating composition containing organic UV absorber (X-40-9309A by Shin-Etsu Chemical Co., Ltd.) instead of the coating composition prepared in Example 2-5.

The cured films on the laminates of Examples 3-1 to 3-3 and Comparative Examples 3-1 and 3-2 were measured and evaluated for weatherability by the following test. The results are shown in Table 3.

[3] Evaluation of weatherability of cured films

A sample of each of the laminates of Examples 3-1 to 3-3 and Comparative Examples 3-1 and 3-2 was subjected to a weather resistance test by using EYE Super UV tester W-151 (Iwasaki Electric Co., Ltd.), irradiating UV light having an intensity of $1\times10^3$ W/m$^2$ at a temperature 60°C and a relative humidity 50%, to an accumulative UV energy dose of 750 MJ/m$^2$. Thereafter, transmission light was measured by a chromaticity meter Z-300A (Nippon Denshoku Industries Co., Ltd.). Provided that $YI^0$ is an initial yellowness index and $YI^1$ is a yellowness index after the test, a difference in yellowness index ($\Delta YI = YI^1 - YI^0$), that is, yellowing of the substrate was determined and used as an index of weather resistance.

Table 3

| | $\Delta YI'$ |
|---|---|
| Example 3-1 | 0.02 |
| Example 3-2 | 0.73 |
| Example 3-3 | 0.04 |
| Comparative Example 3-1 | 13.01 |
| Comparative Example 3-2 | 10.56 |

Examples 3-1 to 3-3 using the coating compositions containing titanium oxide-bearing inorganic particles show a smaller difference in yellowness index before and after UV irradiation than Comparative Example 3-1 using the titanium oxide-free coating composition, indicating that yellowing of polycarbonate by UV is suppressed. The results prove that titanium oxide shields UV radiation to prohibit UV irradiation to the polycarbonate substrate, thus restraining the polycarbonate from photo-degradation.

As compared with Comparative Example 3-2 using the silicone composition containing an organic UV absorber, Examples 3-1 to 3-3 show a small difference in yellowness index before and after UV irradiation. It is believed that since the inorganic UV absorber having high light resistance and environmental stability as compared with the organic dye susceptible to UV degradation is used, the coating is effective for blocking UV irradiation to the underlying substrate persistently without losing a UV absorbing ability due to photo-degradation.

As described above, the invention is effective for imparting the function of inorganic nanoparticles to silicone compositions.

## Claims

1. Inorganic particle-siloxane composite comprising a co-hydrolytic condensate between (A) at least one compound selected from among silicon compounds having the general formulae (1) to (4) and partial hydrolytic condensates thereof and (B) inorganic particles having a 50% cumulative particle diameter ($D_{50}$) of 3 to 100 nm in volume basis particle size distribution as measured by the dynamic light scattering method,
   wherein the number of silicon atoms derived from silicon compound having formula (2) is at least 20 mol% of the total number of silicon atoms in component (A), and component (B) is present in an amount of up to 65% by weight of the overall co-hydrolytic condensate,

   $$Si(OR^1)_4 \qquad (1)$$

   $$R^2Si(OR^1)_3 \qquad (2)$$

   $$R^3R^4Si(OR^1)_2 \qquad (3)$$

   $$R^5R^6R^7SiOR^1 \qquad (4)$$

   wherein $R^1$ is each independently hydrogen or a $C_1$-$C_{20}$ alkyl group, $R^2$ to $R^7$ are each independently hydrogen, or a $C_1$-$C_{20}$ alkyl, $C_6$-$C_{20}$ aryl or $C_7$-$C_{20}$ aralkyl group which may be substituted with a halogen, vinyl, allyl, acrylic or methacrylic moiety.

2. Inorganic particle-siloxane composite of claim 1 wherein said inorganic particles are particles of at least one metal oxide selected from among titanium oxide, aluminum oxide, cerium oxide, zinc oxide, indium oxide, zirconium oxide, tin oxide, manganese oxide, iron oxide, silicon oxide, and complexes thereof.

3. Inorganic particle-siloxane composite of claim 1 or 2 wherein said inorganic particles are of core/shell structure having a core in the form of a tetragonal titanium oxide solid solution nanoparticle having tin and/or manganese incorporated in solid solution, and a shell of silicon oxide around the core.

4. Inorganic particle-siloxane composite of any one of claims 1 to 3 wherein at least one of silicon-bonded alkoxy groups and hydroxyl groups is at 0.2 to 1.5 molar equivalents relative to the total of silicon atoms derived from M,

D and T units in the inorganic particle-siloxane composite.

**5.** A silicone composition comprising an inorganic particle-siloxane composite of any one of claims 1 to 4.

**6.** A silicone composition of claim 5 further comprising a volatile solvent free of silicon-bonded alkoxy groups and hydroxyl groups, the volatile solvent being present in an amount of less than 10% by weight.

**7.** A silicone composition of claim 5 or 6, further comprising (C) a catalyst capable of promoting hydrolytic condensation reaction.

**8.** A coating agent comprising a silicone composition of any one of claims 5 to 7.

**9.** A coated article comprising a substrate and a cured film formed of a coating agent of claim 8 on at least one surface of the substrate, directly or via at least one layer.

**10.** A method of preparing an inorganic particle-siloxane composite, comprising the steps of:

($\alpha$) effecting co-hydrolytic condensation reaction between (A) at least one compound selected from silicon compounds having the general formulae (1) to (4) and partial hydrolytic condensates thereof, and (B) inorganic particles having a 50% cumulative particle diameter ($D_{50}$) of 3 to 100 nm in volume basis particle size distribution as measured by the dynamic light scattering method, the inorganic particles being present as a dispersion in a polar organic solvent, and
($\beta$) distilling off the organic solvent,

wherein the number of silicon atoms derived from the silicon compound having formula (2) is at least 20 mol% of the total number of silicon atoms in component (A), and the inorganic particles are blended in an amount of up to 65% by weight of the overall inorganic particle-siloxane composite,

$$Si(OR^1)_4 \qquad (1)$$

$$R^2Si(OR^1)_3 \qquad (2)$$

$$R^3R^4Si(OR^1)_2 \qquad (3)$$

$$R^5R^6R^7SiOR^1 \qquad (4)$$

wherein each $R^1$ independently is hydrogen or a $C_1$-$C_{20}$ alkyl group, and each of $R^2$ to $R^7$ independently is hydrogen or a $C_1$-$C_{20}$ alkyl, $C_6$-$C_{20}$ aryl or $C_7$-$C_{20}$ aralkyl group which may be substituted with a halogen, vinyl, allyl, acrylic or methacrylic moiety.

**11.** A method of claim 10 wherein the polar organic solvent is at least one member selected from the group consisting of methanol, ethanol, isopropyl alcohol, and n-propyl alcohol.

**12.** A method of claim 10 or 11 wherein in step ($\alpha$) hydrolytic condensation reaction is carried out in the presence of water while using a cation exchange resin as a catalyst for promoting co-hydrolytic condensation.

FIG.1

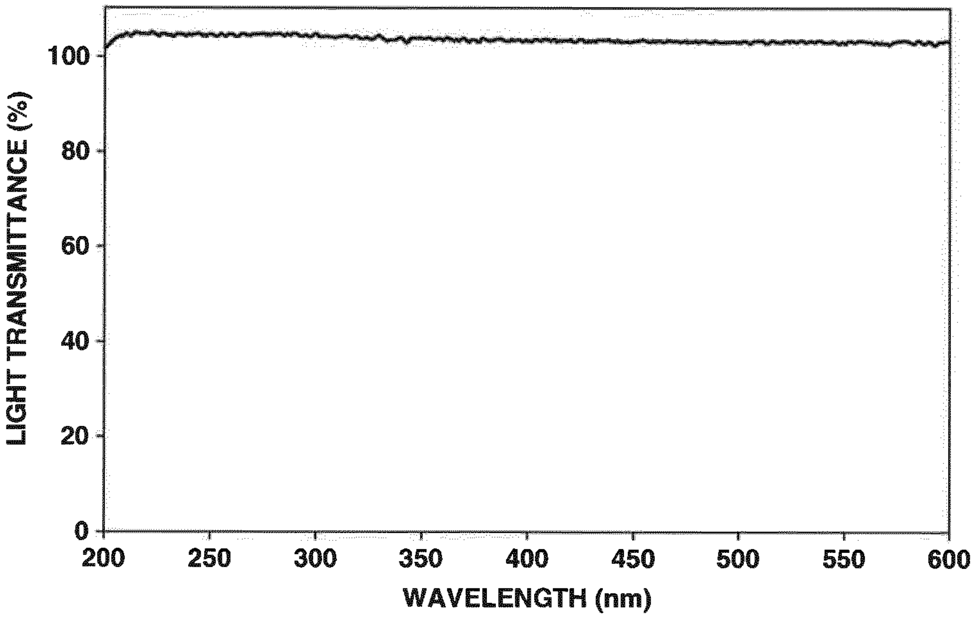
LIGHT TRANSMITTANCE (%)
100
80
60
40
20
0
200
250
300
350
400
450
500
550
600
WAVELENGTH (nm)

FIG.2

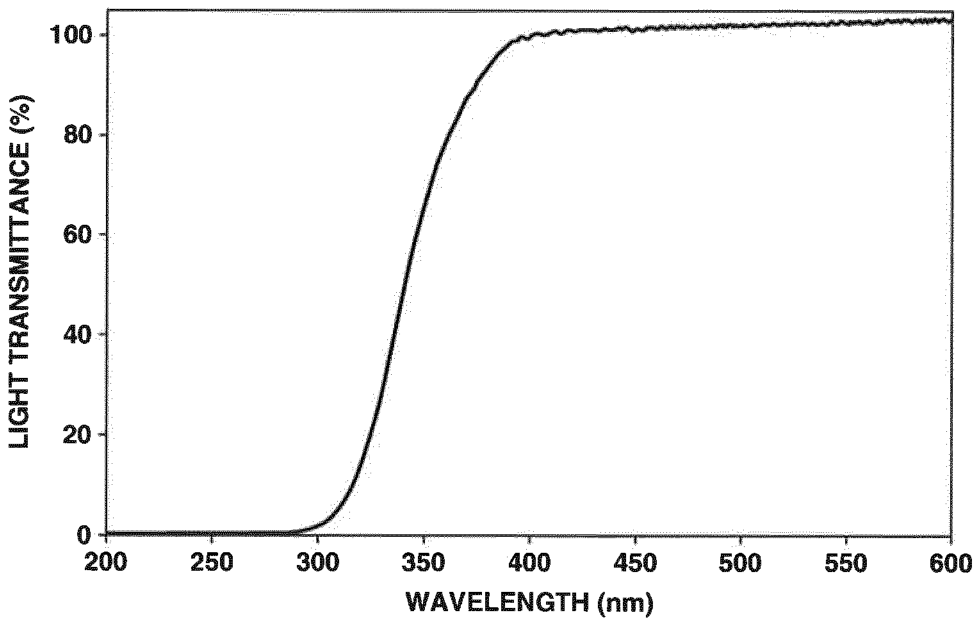
LIGHT TRANSMITTANCE (%)
100
80
60
40
20
0
200
250
300
350
400
450
500
550
600
WAVELENGTH (nm)

FIG.3

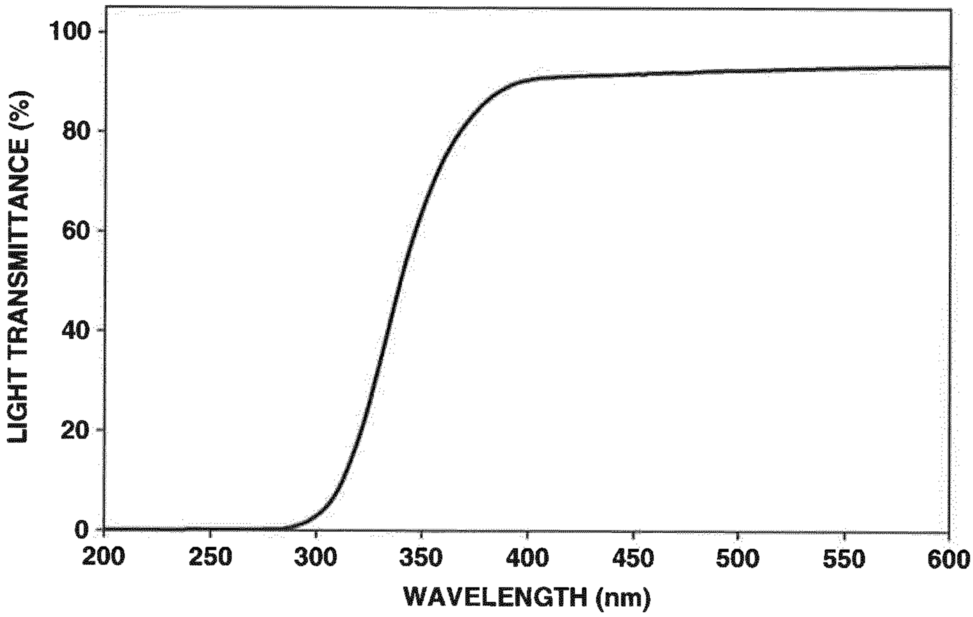
100
80
60
40
20
0
LIGHT TRANSMITTANCE (%)
200
250
300
350
400
450
500
550
600
WAVELENGTH (nm)

FIG.4

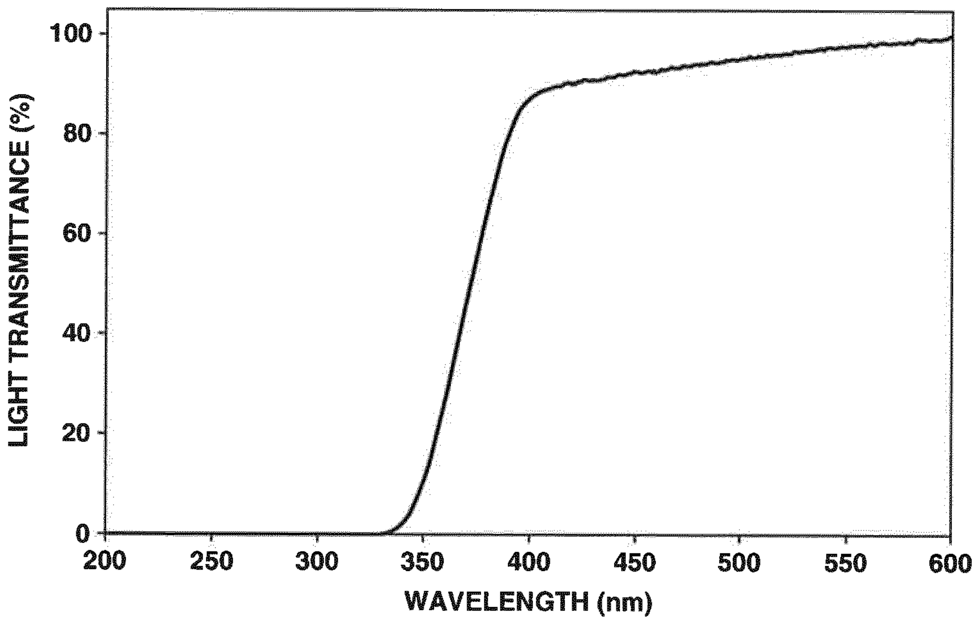
100
80
60
40
20
0
LIGHT TRANSMITTANCE (%)
200
250
300
350
400
450
500
550
600
WAVELENGTH (nm)

FIG.5

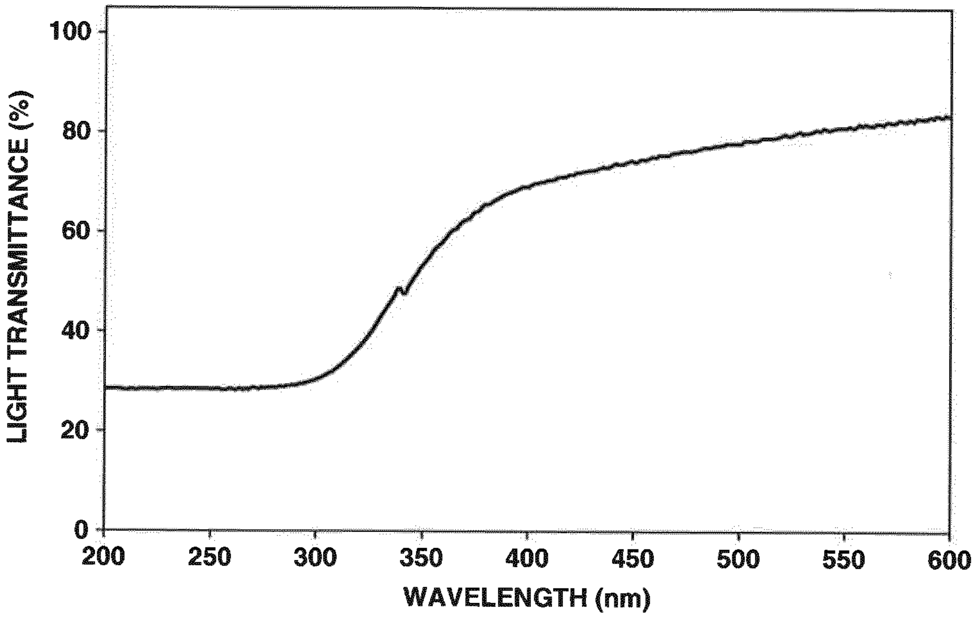
100
80
60
40
20
0
LIGHT TRANSMITTANCE (%)
200
250
300
350
400
450
500
550
600
WAVELENGTH (nm)

FIG.6

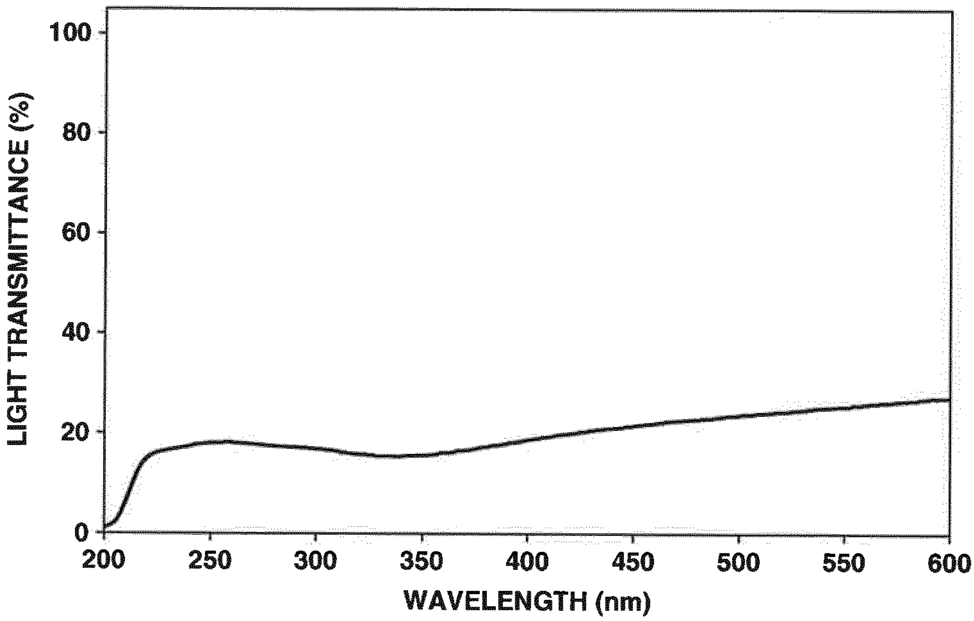
100
80
60
40
20
0
LIGHT TRANSMITTANCE (%)
200
250
300
350
400
450
500
550
600
WAVELENGTH (nm)

**INTERNATIONAL SEARCH REPORT**

International application No.
PCT/JP2017/039884

A. CLASSIFICATION OF SUBJECT MATTER
Int. Cl. C08G77/42(2006.01)i, C09D7/12(2006.01)i, C09D183/04(2006.01)i, C08L83/10(2006.01)n

According to International Patent Classification (IPC) or to both national classification and IPC

B. FIELDS SEARCHED
Minimum documentation searched (classification system followed by classification symbols)
Int. Cl. C08G77/00-77/62, C09D7/00-7/14, C09D183/00-183/16, C08L83/00-83/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)
JSTPlus/JMEDPlus/JST7580 (JDreamIII), CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-515526 A (EPISY (ENGINEERED NANOPRODUCTS GERMANIUM) AG) 19 May 2011, claims 1-26, paragraphs [0001], [0004], [0021], [0030], [0031], [0033], [0034], embodiments & US 2011/0201735 A1, claims, examples & WO 2009/115566 A2 & EP 2103642 A1 & CN 101970538 A | 1, 2, 4-7, 10-12<br>3, 8, 9 |
| Y | WO 2007/52580 A1 (MITSUI CHEMICALS, INC.) 10 May 2007, claims 1-13, paragraphs [0001], [0015], [0019], embodiments & TW 200728378 A | 3, 8, 9 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| | |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2017/039884

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-113760 A (SEIKO EPSON CORP.) 07 May 1996, claims 1-3, paragraphs [0001], [0006], [0076], embodiments (Family: none) | 8, 9 |
| A | JP 2013-49848 A (ROHM & HAAS ELECT MATERIALS LLC) 14 March 2013, entire document & US 2013/0045552 A1, entire document & DE 102012015739 A & FR 2979153 A & CN 103022380 A & KR 10-2013-0020951 A & TW 201321446 A | 1-12 |
| A | JP 2003-7135 A (JSR CORP.) 10 January 2003, entire document (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5353843 B
- JP 2015034106 A
- WO 2013094738 A
- JP 5472543 B
- JP 2014019611 A
- JP 2016014132 A


### Non-patent literature cited in the description


- *J. Org. Chem.,* 1980, vol. 45, 1164
- *J. Org. Chem.,* 1999, vol. 64, 7707